# EUROPÄISCHE PATENTSCHRIFT

(11) **EP 4 230 348 B1**
(45) Veröffentlichungstag und Bekanntmachung des Hinweises auf die Patenterteilung: **21.05.2025**
(21) Anmeldenummer: 23153944.6
(22) Anmeldetag: 30.01.2023
(51) Int. Cl.: B25B 5/00, B25B 11/02, B62D 65/02, B62D 65/06, B05B 13/02, E05C 21/00, B25B 27/00

(54) **FERTIGUNGSHILFSMITTEL UND VERFAHREN FÜR DIE LACKIERUNG EINER KAROSSERIE**
PRODUCTION MEANS AND METHOD FOR PAINTING A VEHICLE BODY
MOYEN D'USINAGE ET PROCÉDÉ DE PEINTURE D'UNE CARROSSERIE

(30) Priorität: 16.02.2022 EP 22157098
(43) Veröffentlichungstag der Anmeldung: 23.08.2023
(73) Patentinhaber: LMB Kunststofftechnik GmbH, 26789 Leer-Loga (DE)
(72) Erfinder: Abel, Anton, 26789 Leer-Loga (DE)
(74) Vertreter: Eisenführ Speiser

(56) Entgegenhaltungen:
- DE-A1- 102020 105 268
- US-A1- 2010 066 105

## Beschreibung

Die vorliegende Erfindung betrifft ein Fertigungshilfsmittel und ein Verfahren für die Lackierung einer Karosserie, insbesondere einer Kraftfahrzeug-Karosserie, mit einem Rahmen und einer an dem Rahmen montierten Tür.

Fertigungshilfsmittel sind passive Betriebsmittel, die direkt an der Fertigung beteiligt sind. Als Betriebsmittel werden dabei Arbeitsmittel zur Erfüllung einer Aufgabe in einem Arbeitssystem verstanden. Bei Fertigungshilfsmitteln kann sich um einzelne Bauteile oder Baugruppen von miteinander interagierenden Bauteilen handeln. Da sie passiv sind, können sie alleine nicht tätig werden wie aktive Betriebsmittel (Maschinen). Außerdem sind sie direkt an der Fertigung beteiligt, also nicht nur indirekt wie Gebäude oder Transport- oder Lagereinrichtungen.

Als Karosserie wird der komplette Aufbau eines Fahrzeugs auf einem tragenden Fahrgestell verstanden. Bei dem Fahrzeug kann es sich um ein Luft-, Wasser- oder Landfahrzeug handeln.

Bei der Lackierung von Karosserien von Fahrzeugen werden Fertigungshilfsmittel verwendet, um die an dem Fahrzeugrahmen montierte Tür in einem definierten Abstand von zumeist wenigen Millimetern zur Tür zu arretieren. Damit soll das Entstehen einer Lackkante zwischen Tür und Fahrzeugrahmen verhindert werden. Der Lackierprozess umfasst dabei zumeist eine Vielzahl von Verfahrensschritten, welche ein wiederholtes Öffnen und Arretieren der Tür notwendig machen. Die verwendeten Fertigungshilfsmittel müssen daher neben dem Arretieren auch ein anschließendes Öffnen der Fahrzeugtür zulassen.

In der Automobilindustrie werden Fahrzeuge zumeist in Serien bzw. Großserien produziert und Fertigungsprozesse, wie das Lackieren, möglichst automatisiert durchgeführt. Herkömmliche, aus Stahl gefertigte Fertigungshilfsmittel, erfordern aufgrund komplizierter Verriegelungsmechanismen ein manuelles Entriegeln des Fertigungshilfsmittels. Dies steht einer vollautomatischen Fahrzeuglackierung entgegen und führt damit höheren Produktionskosten.

Aus der DE 10 2020 105 268.5 ist eine Fixiereinrichtung zum Fixieren eines Anbauteils relativ zu einer Karosserie eines Kraftwagens bekannt, mit zwei separat voneinander ausgebildeten Fixierelementen, wobei ein erstes der Fixierelemente ein erstes Verbindungselement aufweist und unabhängig von dem zweiten Fixierelement reversibel lösbar an der Karosserie befestigbar ist, wobei das zweite Fixierelement ein zweites Verbindungselement aufweist und unabhängig von dem ersten Fixierelement reversibel lösbar an dem Anbauteil befestigbar ist, und wobei die Fixierelemente über die Verbindungselemente reversibel lösbar miteinander verbindbar sind. Das einstückig ausgebildete erste Fixierelement weist dabei ein Halteelement auf, welches in eine Ausnehmung der Karosserie einsteckbar ist und zwei entlang einer Richtung voneinander beabstandete Wandungen aufweist, die in die Ausnehmung einsteckbar sind.

Aus der US 2010/0066105 A1 ist eine Vorrichtung zum Verriegeln eines Öffnungselements gegenüber einem festen Element einer Kraftfahrzeugkarosserie bekannt, die dazu bestimmt ist, an einer Wand des Öffnungselements oder des festen Elements befestigt zu werden, und mindestens ein Anschlagmittel umfasst, das dazu bestimmt ist, elastisch mit mindestens einem komplementären Anschlagmittel zusammenzuwirken, das an dem festen Element bzw. dem Öffnungselement befestigt ist, um die Rückhaltung des genannten Öffnungselements zu ermöglichen.

Zudem sind Fertigungshilfsmittel für die Lackierung von Karosserien bekannt, welche an einer Tür montiert werden und durch Betätigen eines Hebelmechanismus die Tür in einem definierten Abstand zu dem Fahrzeugrahmen an selbigem verriegeln. Derartige Fertigungshilfsmittel sind zumeist aus Stahl gefertigt. Zum Entriegeln der Tür von dem Fahrzeugrahmen ist eine erneute Betätigung des Hebelmechanismus erforderlich. Eine solche Betätigung eines innerhalb der Karosserie befindlichen Hebelmechanismus ist bislang durch Fertigungsroboter nicht realisierbar. Das Fertigungshilfsmittel erfordert ein manuelles Verriegeln mit dem Fahrzeugrahmen durch Betätigen des Hebelmechanismus. Durch das manuelle Entriegeln des Fertigungshilfsmittels werden in der Produktion daher diverse Mitarbeiter benötigt.

Weiterhin lassen sich herkömmliche Fertigungshilfsmittel zumeist nicht zerstörungsfrei von der Karosserie lösen und können somit nicht wiederverwendet werden. Dies steht einer nachhaltigen Produktion entgegen.

Es ist daher Aufgabe der vorliegenden Erfindung, ein Fertigungshilfsmittel anzugeben, welches zumindest einen der aus dem Stand der Technik bekannten Nachteile überwindet. Insbesondere war Aufgabe der vorliegenden Erfindung, ein Fertigungshilfsmittel anzugeben, welches eine vollautomatisierte Lackierung einer Karosserie durch ein vereinfachtes Arretieren und anschließendes Öffnen Tür ermöglicht.

Die Erfindung löst die zugrundeliegende Aufgabe in einem ersten Aspekt durch ein Fertigungshilfsmittel nach Anspruch 1. Die Erfindung schlägt vor, dass das Fertigungshilfsmittel ein erstes Fertigungshilfsteil zur lösbaren Kopplung mit dem Rahmen und ein zweites Fertigungshilfsteil zur lösbaren Kopplung mit der Tür umfasst. Das erste Fertigungshilfsteil und das zweite Fertigungshilfsteil sind dazu eingerichtet, mittels einer Schnappverbindung lösbar miteinander in Eingriff gebracht zu werden und in einem montierten Zustand, in welchem das erste Fertigungshilfsteil mit dem Rahmen und das zweite Fertigungshilfsteil mit der Tür gekoppelt ist, die Tür beabstandet zu dem Rahmen zu arretieren. Bei einem solchen Abstand handelt es sich bevorzugt um einen Abstand von 6 bis 8 mm.

Als Schnappverbindungen werden im Sinne der Erfindung Verbindungen aus Funktionselementen zum lösbaren und unlösbaren, einfachen formschlüssigen Fügen von Bauteilen verstanden. Dabei verformt sich ein Funktionselement elastisch und verhakt anschließend lösbar oder unlösbar mit dem zweiten Funktionselement. Es liegt also ein Formschluss vor.

Im Lackierprozess verbleibt das erste Fertigungshilfsteil somit an dem Rahmen und das zweite Fertigungshilfsteil verbleibt an der Tür. Im Anschluss an den Lackierprozess bzw. einen ersten Lackierzyklus lassen sich das erste Fertigungshilfsteil und das zweite Fertigungshilfsteil durch die jeweils lösbare Kopplung mit dem Rahmen bzw. der Tür zerstörungsfrei wieder lösen. Somit lässt sich das erfindungsgemäße Fertigungshilfsmittel mehrfach verwenden. Weiterhin lässt sich das erste Fertigungshilfsteil wiederholbar mit dem zweiten Fertigungshilfsteil durch Ausbilden der Schnappverbindung in Eingriff bringen. Wie vorstehend beschrieben, muss sich dabei jeweils ein Abschnitt entweder des ersten Fertigungshilfsteils oder des zweiten Fertigungshilfsteils elastisch verformen, um mit dem jeweils anderen Fertigungshilfsteil formschlüssig in Eingriff zu kommen. Für diese elastische Verformung ist somit lediglich das Aufbringen einer Kraft erforderlich. Diese Kraft kann beispielsweise durch eine Schließbewegung der Tür mittels eines Fertigungsroboters automatisiert erfolgen. In entsprechender Weise ist zum Außereingriffbringen des ersten Fertigungshilfsteils von dem zweiten Fertigungshilfsteil ebenfalls lediglich das Aufbringen einer entgegen gerichteten Kraft erforderlich. Somit kann das wiederholte Arretieren und Öffnen der Tür bei der Lackierung einer Karosserie vollautomatisiert durch einen Fertigungsroboter erfolgen.

Die Kraft zum Öffnen der Tür beträgt insbesondere 60 - 100 N, besonders bevorzugt im Wesentlichen 75 - 85 N.

Vorzugsweise ist die Schnappverbindung derart ausgebildet, dass eine auf die Tür wirkende Kraft von 60 - 100 N, bevorzugt im 75 - 85 N, die von dem Rahmen weggerichtet ist, die Schnappverbindung löst bzw. Weiter bevorzugt ist die Schnappverbindung derart ausgebildet, dass eine auf die Tür wirkende Kraft von 60 - 100 N, bevorzugt im 75 - 85 N, die von in Richtung des Rahmens gerichtet ist, die Schnappverbindung eine elastische Verformung zum Ausbilden der Schnappverbindung bewirkt.

Vorzugsweise umfasst das erste Fertigungshilfsteil eine formschlüssig mit dem Rahmen in Eingriff bringbare Aufnahme und ein relativ zu der Aufnahme bewegbares Rastelement. Das Rastelement ist bevorzugt dazu eingerichtet, formschlüssig in eine korrespondierende Montage-Schnittstelle des Rahmens einzugreifen. Dabei bildet das Rastelement insbesondere eine Schnappverbindung mit der korrespondierenden Montage-Schnittstelle des Rahmens aus. Vorzugsweise ist die Bewegung des Rastelements relativ zu der Aufnahme eine Schwenkbewegung. Zum formschlüssigen Ineingriffbringen mit dem Rahmen nimmt die Aufnahme insbesondere zumindest einen Abschnitt des Rahmens auf. Vorzugsweise handelt es sich bei dem Abschnitt des Rahmens um einen Keder in einer Fahrzeugsäule, insbesondere der B- oder C-Säule. Somit wird auf einfache Weise der Fahrzeugrahmen zur Kopplung des ersten Fertigungshilfsteils durch Ausbilden einer formschlüssigen Verbindung genutzt. Die Aufnahme bietet dabei eine zusätzliche Möglichkeit zur Lasteinleitung in den Fahrzeugrahmen, sodass das Rastelement entlastet wird. Das Rastelement bietet dabei eine zusätzliche Sicherung gegen ein ungewolltes Entkoppeln des ersten Fertigungshilfsteils durch das formschlüssige Eingreifen in eine Montage-Schnittstelle des Rahmens. Somit wird das erste Fertigungshilfsteil zuverlässig und reversibel lösbar an dem Rahmen montiert und ist mehrfach verwendbar.

Vorzugsweise ist die Aufnahme durch eine Linearbewegung in einer Längsrichtung mit dem Rahmen in Eingriff bringbar und dazu eingerichtet, Kräfte orthogonal zur Längsrichtung aufzunehmen. Somit ist die Aufnahme auf einfache Weise mit dem Rahmen in Eingriff bringbar und nimmt Kräfte in einer Raumrichtung auf.

Weiter bevorzugt ist das Rastelement durch eine Bewegung relativ zu der Aufnahme, welche zumindest eine Bewegungskomponente orthogonal zur Längsrichtung L aufweist, mit der Montage-Schnittstelle des Rahmens in Eingriff bringbar. Somit führt eine elastische Verformung des ersten Fertigungshilfsteils zur Ausbildung einer Schnappverbindung zwischen dem Rastelement und der Montage-Schnittstelle des Rahmens. Dadurch, dass das Rastelement dazu eine Bewegung relativ zu der Aufnahme ausführt, welche zumindest eine Bewegungskomponente orthogonal zur Längsrichtung aufweist, kann das Rastelement ferner Kräfte in Längsrichtung aufnehmen und somit die mit dem Rahmen in Eingriff stehende Aufnahme arretieren. Vorzugsweise ist das Rastelement durch eine Kombination einer Linearbewegung orthogonal zur Längsrichtung und einer Schwenkbewegung in Richtung der Aufnahme bzw. entgegengesetzt der Aufnahme mit der Montage-Schnittstelle in Eingriff bringbar.

Vorzugsweise ist die Montage-Schnittstelle als eine Ausnehmung und/oder eine Hinterschneidung des Rahmens ausgebildet. Hinterschneidungen und Ausnehmungen sind zumeist am Rahmen vorhanden und müssen nicht eigens eingebracht werden. Somit bedarf es keiner besonderen Anpassung des Rahmens.

Weiter bevorzugt ist das Rastelement innerhalb der Ausnehmung von einer bzw. der Rastposition, in welcher das Rastelement formschlüssig mit der Aufnahme in Eingriff ist, in eine Löseposition verschwenkbar, in welcher das Rastelement aus der Aufnahme heraus bewegbar ist. In gleicher Weise kann das Rastelement von einer bzw. der Rastposition in eine Löseposition verschwenkbar sein, in welcher das Rastelement relativ zu der Hinterschneidung bewegbar ist.

Es ist bevorzugt, dass das Rastelement dazu eingerichtet ist, in der Rastposition Kräfte orthogonal zur Längsrichtung aufzunehmen, derart, dass die im montierten Zustand mit dem Rahmen in Eingriff stehende Aufnahme arretiert wird. Somit kann ein unbeabsichtigtes Lösen der Aufnahme von dem Rahmen, beispielsweise durch eine Bewegung in Längsrichtung, verhindert werden.

Gemäß einer bevorzugten Ausführungsform weist das erste Fertigungshilfsteil einen Hebelmechanismus auf, der einen mit dem Rastelement gekoppelten Hebel umfasst. Vorzugsweise ist das Rastelement durch Aufbringen einer Kraft, insbesondere einer Lösekraft auf den Hebel von der Rastposition in eine bzw. die Löseposition bringbar, wobei die Lösekraft zumindest eine Komponente entgegengesetzt in Längsrichtung aufweist. Somit wird ein Mechanismus zum reversiblen Lösen des Rastelements und damit des ersten Fertigungshilfsteils insgesamt bereitgestellt.

Vorzugsweise weist das erste Fertigungshilfsteil eine Durchschlagsicherung auf, welche dazu eingerichtet ist, im montierten Zustand von dem Rahmen in Richtung der Tür in einem Sicherungsabstand vorzustehen. Die Durchschlagsicherung weist bevorzugt eine solche Steifigkeit und Festigkeit auf, dass sie die Tür gegenüber einem unbeabsichtigten Schließen sichern kann. Somit wird im Prozess zuverlässig verhindert, dass die Tür unbeabsichtigter Weise geschlossen wird und den Rahmen berührt. In diesem Fall würden Schäden am Rahmen bzw. an der Tür entstehen. Im Prozess ist die Tür in etwa 6 - 8 mm geöffnet und wird in dieser Position durch das Fertigungshilfsmittel arretiert. Wird unbeabsichtigt eine Kraft auf die Tür aufgebracht, führt dies zu einer Belastung der Schnappverbindung zwischen dem ersten Fertigungshilfsteil und dem zweiten Fertigungshilfsteil. Das mit dem Rahmen gekoppelte erste Fertigungshilfsteil stellt in diesem Fall durch die Durchschlagsicherung sicher, dass die Tür maximal so weit geschlossen werden kann, bis sie auf die Durchschlagsicherung trifft. Somit wird ein definiertes Öffnungsmaß unabhängig von der Schnappverbindung und einem etwaigen Lösen oder einer Beschädigung derselbigen aufrechterhalten.

Vorzugsweise liegt der Sicherungsabstand dabei in einem Bereich von 1,5 mm bis 6,5 mm, besonders bevorzugt in einem Bereich von 2 mm bis 6 mm. Somit wird ein ausreichender Sicherungsabstand bereitgestellt, sodass die Tür auch unter Berücksichtigung etwaiger Fertigungstoleranzen an einem unbeabsichtigten Schließen gehindert wird. Gleichzeitig steht die Durchschlagsicherung in Richtung der Tür nicht zu weit vor, sodass Beschädigungen am Fahrzeug entstehen könnten oder das Ausbilden der Schnappverbindung zwischen dem ersten Fertigungshilfsteil und dem zweiten Fertigungshilfsteil beeinträchtigt wird.

Vorzugsweise weist das erste Fertigungshilfsteil mindestens eine zwischen der Durchschlagsicherung und der Aufnahme angeordnete Verstärkungsrippe auf, welche dazu eingerichtet ist, die in die Durchschlagsicherung eingeleiteten Kräfte im montierten Zustand über die Aufnahme in den Rahmen abzuleiten. Somit wird eine Beschädigung des Fertigungshilfsmittels und insbesondere des ersten Fertigungshilfsteils verhindert.

Weiter bevorzugt weist das erste Fertigungshilfsteil im Bereich der Aufnahme und/oder benachbart zu dem Rastelement mindestens ein in montiertem Zustand in Richtung des Rahmens vorstehendes Positionierteil auf, welches dazu eingerichtet ist, einen Punkt- und/oder Linienkontakt mit dem Rahmen einzugehen. Somit werden etwaige Kontaktflächen des ersten Fertigungshilfsteils in diesem Bereich beabstandet zu dem Rahmen gehalten. Durch die Ausbildung von Linien- bzw. Punktkontakten in diesem Bereich werden etwaige Fertigungstoleranzen berücksichtigt und der Kontakt zwischen dem ersten Fertigungshilfsteil und dem Rahmen minimiert. Somit werden Schäden am Rahmen, beispielsweise aufgrund von Fertigungstoleranzen, vermieden.

Weiter bevorzugt weist das erste Fertigungshilfsteil mindestens ein benachbart zu dem Rastelement angeordnetes Begrenzungselement auf, welches dazu eingerichtet ist, die Bewegung des Rastelements orthogonal zur Längsrichtung zu begrenzen. Somit werden Schäden am ersten Fertigungshilfsteil sowie am Rahmen vermieden, da das Fertigungshilfsteil insbesondere durch eine Bewegung orthogonal zur Längsrichtung, nicht zu weit in Richtung des Rahmens bzw. der Tür bewegt werden kann.

Gemäß einer bevorzugten Ausführungsform weist das erste Fertigungshilfsteil eine Schnapp-Aufnahme und das zweite Fertigungshilfsteil einen Kopplungsabschnitt zum Ausbilden der Schnappverbindung auf. Weiter bevorzugt ist die Schnapp-Aufnahme dazu eingerichtet, sich reversibel elastisch zu verformen, um den Kopplungsabschnitt aufzunehmen. Somit wird der Kopplungsabschnitt an dem zweiten Fertigungshilfsteil und damit an der Tür bereitgestellt, welche zum Ausbilden der Schnappverbindung in Richtung des Fahrzeugrahmens bewegt wird. Durch diese Schließbewegung kommt der Kopplungsabschnitt mit der Schnapp-Aufnahme in Kontakt und überträgt Kräfte, welche ein reversibel elastisches Verformen der Schnapp-Aufnahme bewirken, infolgedessen die Schnapp-Aufnahme den Kopplungsabschnitt aufnimmt. Die Schnapp-Aufnahme ist bevorzugt in Richtung der Tür geöffnet.

Vorzugsweise weist das erste Fertigungshilfsteil einen mit der Schnapp-Aufnahme verbundenen Einführabschnitt auf. Weiter bevorzugt ist der Kopplungsabschnitt dazu eingerichtet, eine Kraft auf den Einführabschnitt auszuüben, um die Schnapp-Aufnahme reversibel elastisch zu verformen. Somit wird die Krafteinleitung in die Schnapp-Aufnahme durch die Bereitstellung eines Einführabschnitts erleichtert und insbesondere Fertigungstoleranzen berücksichtigt, welche zu Toleranzen hinsichtlich der Anordnung des ersten Fertigungshilfsteils relativ zu dem zweiten Fertigungshilfsteil führen.

Gemäß einer weiteren bevorzugten Ausführungsform umfasst das zweite Fertigungshilfsteil ein erstes Montageteil, welches dazu eingerichtet ist, formschlüssig mit der Tür in Eingriff gebracht zu werden und/oder ein zweites Montageteil, welches dazu eingerichtet ist, eine Schnappverbindung mit der Tür auszubilden. Durch die Ausbildung eines Formschlusses kann das zweite Fertigungshilfsteil sicher an der Tür montiert werden und anschließend wieder gelöst werden. Weiterhin ermöglicht ein zweites Montageteil zum Ausbilden einer Schnappverbindung ein schnelles Koppeln des zweiten Fertigungshilfsteils mit der Tür. Besonders bevorzugt ist dabei die Kombination eines ersten Montageteils zum Ausbilden einer formschlüssigen Verbindung mit der Tür und ein zweites Montageteil zum Ausbilden einer Schnappverbindung mit der Tür.

Vorzugsweise arretiert das zweite Montageteil durch Ausbildung einer Schnappverbindung mit der Tür dabei das erste Montageteil in einer Position, in welcher das erste Montageteil formschlüssig mit der Tür in Eingriff ist. Somit kann die wesentliche Krafteinleitung bevorzugt durch die formschlüssige Verbindung mit dem ersten Montageteil erfolgen und in Ergänzung dazu bzw. im Wesentlichen zum Arretieren des ersten Montageteils ein zweites Montageteil bereitgestellt werden.

Gemäß einer besonders bevorzugten Ausführungsform ist das erste Montageteil in eine Öffnung der Tür einbringbar und durch eine Rotation um eine Drehachse in eine Verriegelungsstellung bringbar, in welcher das erste Montageteil formschlüssig mit der Öffnung in Eingriff bringbar ist.

Es ist weiter bevorzugt, dass das zweite Fertigungshilfsteil elastisch verformbar ist, derart, dass das zweite Montageteil für den Fall, dass das erste Montageteil mit der Öffnung in Eingriff ist, durch Ausbilden einer Schnappverbindung mit der Tür in Eingriff bringbar ist. Somit arretiert die Schnappverbindung des zweiten Montageteils das erste Montageteil in seiner Verriegelungsstellung. Als Öffnungen können dabei beispielsweise ovale Löcher dienen, wobei das erste Montageteil Abmaße aufweist, welche es in einer Löseposition erlauben, in die Öffnung eingebracht zu werden und in der Verriegelungsstellung verhindern, aus der Öffnung herausbewegt zu werden. Ferner wird die Montagesicherheit erhöht, da die Schnappverbindung nur in dem Fall ausgebildet werden kann, dass das erste Montageteil formschlüssig mit der Tür in Eingriff in der Verriegelungsstellung ist.

Vorzugsweise weist das zweite Fertigungshilfsteil mindestens einen Montageabschnitt auf und ist dazu eingerichtet, sich durch Aufbringen einer Kraft, insbesondere einer Lösekraft, auf den Montageabschnitt reversibel elastisch zu verformen, um das zweite Montageteil und die Tür außer Eingriff zu bringen. Bevorzugt ist ein solcher Montageabschnitt beispielsweise durch Verstärkungsrippen verstärkt, um eine Beschädigung des Fertigungshilfsmittels beim Aufbringen der Kraft zu verhindern. Besonders bevorzugt sind dabei zwei im montierten Zustand in vertikaler Richtung beabstandete Montageabschnitte vorgesehen, sodass in Abhängigkeit von der Anordnung der Karosserie relativ zu einem Bediener entweder der erste Montageabschnitt oder der zweite Montageabschnitt genutzt werden kann und eine ergonomisch optimierte Nutzung des Fertigungshilfsmittels ermöglicht.

Vorzugsweise ist ein bzw. der Kopplungsabschnitt des zweiten Fertigungshilfsteils in einem Abstand zu dem ersten Montageteil und/oder dem zweiten Montageteil angeordnet, derart, dass der Kopplungsabschnitt im montierten Zustand zu dem Rahmen und der Tür beabstandet ist. Beim Lackieren der Karosserie gelangt Lack auf das Fertigungshilfsmittel. Beim Lösen der Schnappverbindung zwischen dem ersten Fertigungshilfsteil und dem zweiten Fertigungshilfsteil reißt der Lack zwischen den beiden Bauteilen und bricht gegebenenfalls ab. Dieser abbrechende Lack fällt herunter und gelangt durch den Abstand des Kopplungsabschnitts und damit der Schnappverbindung zu dem ersten Montageteil und/oder dem zweiten Montageteil auf den innenliegenden Fahrzeugboden, auf welchen insbesondere Teppiche oder andere Teile des Interieurs platziert werden.

Vorzugsweise ist der Kopplungsabschnitt in einem Abstand von 50 mm bis 80 mm beabstandet zu dem ersten Montageteil und/oder dem zweiten Montageteil und/oder der Tür im montierten Zustand angeordnet. Somit wird ein ausreichender Abstand bereitgestellt, um Schäden an der Karosserie, beispielsweise dem Schweller oder dem Keder, zu verhindern. Gleichzeitig wird ein wirtschaftliches Bauteil bereitgestellt, da auf unnötigen Materialeinsatz verzichtet wird.

Weiter bevorzugt weist das zweite Fertigungshilfsteil ein im montierten Zustand unterhalb des Kopplungsabschnitts angeordnetes Ablenkelement auf, welches dazu eingerichtet ist, vom Kopplungsabschnitt und/oder der Schnapp-Aufnahme herabfallende Lackreste aufzunehmen und von der Tür und/oder dem Rahmen wegzuleiten. Somit wird sichergestellt, dass herabfallende Lackreste im Bereich der Schnappverbindung zwischen dem ersten Fertigungshilfsteil und dem zweiten Fertigungshilfsteil nicht auf den Fahrzeugrahmen und insbesondere den Schweller treffen und beschädigen.

Gemäß einer bevorzugten Ausführungsform umfasst das Fertigungshilfsmittel ein thermoplastisches Polymer, vorzugsweise ein glasfaserverstärktes Polymer, insbesondere Polyamid 6 mit einem Glasfaseranteil von 20 % bis 40 %, besonders bevorzugt mit einem Glasfaseranteil von 30 %. Weiter bevorzugt ist das Fertigungshilfsmittel durch einen Spritzgussprozess hergestellt. Durch die entsprechende Materialzusammensetzung wird ein ausreichend temperaturbeständiges Material im Hinblick auf den Lackierprozess bereitgestellt. Gleichzeitig sind thermoplastische Polymere spritzgussfähig. Im Spritzgussprozess können komplexe Bauteile in einem einzigen Fertigungsschritt hergestellt werden. Die Fertigungskosten für das Fertigungshilfsmittel sind somit verglichen mit Fertigungshilfsmitteln aus Stahl reduziert. Durch den Einsatz von Glasfasern wird ferner die Festigkeit und Steifigkeit des Fertigungshilfsmittels erhöht und eine ausreichende Temperaturbeständigkeit sichergestellt.

Weiterhin weist das Fertigungshilfsmittel einen Sicherungsmechanismus auf, welcher dazu eingerichtet ist, die Schnappverbindung zwischen dem ersten Fertigungshilfsteil und dem zweiten Fertigungshilfsteil selektiv zu arretieren. Der Sicherungsmechanismus verhindert hierbei wirksam ein Lösen der Schnappverbindung und damit ein Außereingriffbringen des ersten und zweiten Fertigungshilfsteils. Die Erfinder berücksichtigen hierbei, dass es im Betrieb zu Erschütterungen und dergleichen kommen kann, die ein Lösen der Schnappverbindung bewirken können. Der Sicherungsmechanismus kann ein solches Lösen bei Bedarf verhindern. Unter einem Arretieren der Schnappverbindung ist vorliegend ein Sichern gegenüber einem unbeabsichtigten Lösen zu verstehen.

Vorzugsweise ist der Sicherungsmechanismus dem ersten Fertigungshilfsteil zugeordnet. Besonders bevorzugt ist der Sicherungsmechanismus dabei mit dem ersten Fertigungshilfsteil verbunden. Das erste Fertigungshilfsteil und damit der Sicherungsmechanismus werden mit dem Rahmen verbunden und ermöglichen somit eine zuverlässige Krafteinleitung in die Karosserie, sodass ein unbeabsichtigtes Öffnen oder Schließen der Tür wirksam vermieden wird.

Weiter bevorzugt wird die durch den Sicherungsmechanismus arretierte bzw. gesicherte Schnappverbindung durch eine bzw. die Schnapp-Aufnahme und einen bzw. den mit der Schnapp-Aufnahme in Eingriff bringbaren Kopplungsabschnitt ausgebildet. Die Schnapp-Aufnahme ist dazu eingerichtet, sich zum selektiven Aufnehmen und Freigeben des Kopplungsabschnitts reversibel elastisch zu verformen. Weiter bevorzugt ist der Sicherungsmechanismus dabei in eine Sperrstellung bringbar, in welcher er dazu eingerichtet ist, das elastische Verformen der Schnapp-Aufnahme zum Freigeben des Kopplungsabschnitts zu hemmen und/oder zu sperren. Durch das Hemmen bzw. Sperren der elastischen Verformung der Schnapp-Aufnahme, lässt sich die Schnappverbindung zwischen dem ersten Fertigungshilfsteil und dem zweiten Fertigungshilfsteil nicht bzw. nur unter erhöhter Kraftaufwendung lösen. Somit wird im Betrieb ein unbeabsichtigtes Lösen der Schnappverbindung verhindert und die Tür sicher am Rahmen arretiert.

Weiter bevorzugt weist das erste Fertigungshilfsteil einen bzw. den mit der Schnapp-Aufnahme verbundenen Einführabschnitt auf. Vorzugsweise ist der Kopplungsabschnitt dazu eingerichtet, eine Verformungskraft auf den Einführabschnitt auszuüben, um die Schnapp-Aufnahme reversibel elastisch zu verformen. Bevorzugt ist der Sicherungsmechanismus dabei dazu eingerichtet, eine entgegen der Verformungskraft wirkende Hemmkraft auf den Einführabschnitt aufzubringen. Somit muss zum elastischen Verformen des Einführabschnitts und damit zum Lösen der Schnappverbindung zunächst die Hemmkraft überwunden werden. Das Aufbringen einer solchen Hemmkraft lässt auch weiterhin ein Lösen der Schnappverbindung und damit ein Öffnen der am Fahrzeugrahmen arretierten Tür zu, sorgt im Betrieb aber dafür, dass nicht bereits geringste Erschütterungen zu einem Öffnen der Tür führen.

Gemäß einer bevorzugten Ausführungsform weist der Sicherungsmechanismus einen von einer Freigabestellung in die Sperrstellung schwenkbaren Bügel und ein mit dem Bügel in der Sperrstellung in Eingriff bringbares Verriegelungselement auf. Der Bügel ist bevorzugt dazu eingerichtet, in der Sperrstellung mit dem Verriegelungselement form- und/oder kraftschlüssig verbunden zu werden. Besonders bevorzugt ist der Bügel dazu ausgebildet, in der Sperrstellung durch Ausbilden einer Schnappverbindung mit dem Verriegelungsmechanismus in Eingriff zu kommen. Durch Ausbilden einer form- und/oder kraftschlüssigen Verbindung zwischen dem Bügel und dem Verriegelungselement wird die Schnappverbindung bevorzugt durch einen Formschluss arretiert, also gesichert. Ein Verschwenken des Bügels zum Ausbilden des Eingriffs mit dem Verriegelungselement ermöglicht über dies eine einfache Handhabung. Es soll dabei verstanden werden, dass in der Freigabestellung des Sicherungsmechanismus das erste Fertigungshilfsteil mit dem zweiten Fertigungshilfsteil durch Ausbilden einer Schnappverbindung selektiv verbindbar ist. In der Freigabestellung des Sicherungsmechanismus wird diese Schnappverbindung dabei lediglich nicht zusätzlich gesichert, sodass es durch eine elastische Verformung der Schnapp-Aufnahme zu einem Lösen des Kopplungsabschnitts kommen kann. Der Bügel ist bevorzugt nur für den Fall in die Sperrstellung bringbar, dass die Schnapp-Aufnahme mit dem Kopplungsabschnitt in Eingriff ist.

Weiter bevorzugt weist der Einführabschnitt einen ersten Schenkel und einen zweiten Schenkel auf, die sich bevorzugt in distaler Richtung voneinander entfernen, wobei der Bügel dem ersten Schenkel zugeordnet ist und das Verriegelungselement dem zweiten Schenkel zu geordnet ist. Vorzugsweise ist der Bügel in der Sperrstellung zum Hemmen der elastischen Verformung des ersten Schenkels relativ zu dem zweiten Schenkel mit dem Verriegelungselement in Eingriff bringbar. Der Kopplungsabschnitt ist somit entlang des ersten und zweiten Schenkels in die Schnapp-Aufnahme hinein bewegbar, wobei eine Verformungskraft auf die Schenkel des Einführabschnitts aufgebracht wird, welche zu einem elastischen Verformen der Schnapp-Aufnahme führt. Sind die Schnapp-Aufnahme und der Kopplungsabschnitt miteinander im Eingriff und bilden die Schnappverbindung aus, kooperieren der Bügel und das Verriegelungselement des Sicherungsmechanismus dabei derart, dass der erste Schenkel relativ zu dem zweiten Schenkel arretiert wird. Ein elastisches Verformen der Schenkel relativ zueinander und damit ein Verformen der Schnapp-Aufnahme wird somit verhindert.

Von der Sperrstellung ist der Bügel bevorzugt durch Verschwenken in die Freigabestellung bringbar, in welchen das Verriegelungselement und der Bügel außer Eingriff sind. In dieser Freigabestellung wird das elastische Verformen der Schnapp-Aufnahme sowie das Bewegen der Schenkel relativ zueinander nicht länger gehemmt.

Es ist bevorzugt, dass der Bügel dazu eingerichtet ist, sich in der Freigabestellung an zumindest einer Anlagefläche des ersten Fertigungshilfsteils abzustützen. Somit wird ein Überstrecken des Bügels beim Verschwenken in die Freigabestellung verhindert. Somit werden Schäden am Bügel und damit des ersten Fertigungshilfsteils, insbesondere durch Abbrechen oder Überbiegen des Bügels, verhindert.

Vorzugsweise ist das Rastelement dazu eingerichtet, in der Rastposition in die Montage-Schnittstelle des Rahmens einzugreifen und in der Löseposition die Montage-Schnittstelle freizugeben.

Vorzugsweise weist der Hebelmechanismus ein mit dem Rastelement kooperierendes Federelement auf, das dazu eingerichtet ist, eine in Richtung der Rastposition wirkende Federkraft zumindest mittelbar auf das Rastelement aufzubringen. Somit wirkt die Federkraft als eine Rückstellkraft auf das Rastelement, sodass dieses für den Fall, dass die Lösekraft die Federkraft nicht übersteigt, in der Rastposition gehalten wird. Ein zusätzliches Federelement erhöht dabei die Einsatzdauer eines solchen Fertigungshilfsmittels, welches zumeist aus Kunststoff gefertigt ist und damit Prozessen wie der Relaxation unterliegt. Da die Federkraft zumindest mittelbar auf das Rastelement aufgebracht wird, ist keine direkte Verbindung zwischen dem Rastelement und dem Federelement erforderlich, sondern die Federkraft kann über zwischengeschaltete Hilfselemente auf das Rastelement wirken. Die Federkraft wirkt also nicht zwingend räumlich gesehen in Richtung der Rastposition, bewirkt jedoch, dass auf das Rastelement eine Kraft in Richtung der Rastposition wirkt.

Vorzugsweise ist das Federelement zwischen den Hebel und einer gegenüberliegenden Stützfläche angeordnet und im Wesentlichen u-förmig ausgebildet. Vorzugsweise weist das Federelement zwei Schenkelabschnitte auf, von denen einer mit dem Hebel in Anlage ist.

Vorzugsweise ist das Federelement dazu eingerichtet, die Federkraft auf den Hebel aufzubringen, derart, dass der Hebel die Federkraft auf das Rastelement überträgt und die Lösekraft zum Bringen des Rastelements in die Löseposition die Federkraft überwinden muss. Somit wirkt auf den Hebel einerseits unmittelbar die Lösekraft und andererseits die entgegen der Lösekraft wirkende Federkraft. Die Krafteinleitung wird somit vereinfacht.

Vorzugsweise weist das erste Fertigungshilfsteil eine, insbesondere zweite, Verstärkungsrippe auf, die sich von der Schnapp-Aufnahme zum Rastelement erstreckt und dazu eingerichtet ist, Kräfte von der Schnapp-Aufnahme über das Rastelement in den Rahmen zu leiten. Die Krafteinleitung innerhalb des ersten Fertigungshilfsteils wird somit optimiert und Schäden an den Lasteinleitungselementen, nämlich der Schnapp-Aufnahme oder dem Rastelement vermieden. Weiter bevorzugt erstreckt sich die Verstärkungsrippe von der Schnapp-Aufnahme zum Rastelement und zur Aufnahme. In diesem Fall ist die Verstärkungsrippe dazu eingerichtet, Kräfte von der Schnapp-Aufnahme über das Rastelement und die Aufnahme in den Rahmen zu leiten. Die Erfindung wurde vorstehend in einem ersten Aspekt in Bezug auf ein Fertigungshilfsmittel beschrieben. Die Erfindung löst die eingangs genannte Aufgabe in einem zweiten Aspekt durch ein Verfahren zum lösbaren Arretieren einer Tür an einem Rahmen einer Karosserie, insbesondere einer Kraftfahrzeug-Karosserie. Das Verfahren umfasst die Schritte: Bereitstellen eines Fertigungshilfsmittels mit einem ersten Fertigungshilfsteil und einem zweiten Fertigungshilfsteil, lösbares Koppeln des ersten Fertigungshilfsteils mit dem Rahmen, lösbares Koppeln des zweiten Fertigungshilfsteils mit der Tür, Bewegen der Tür in Richtung einer geschlossenen Position der Tür, wobei das erste Fertigungshilfsteil und das zweite Fertigungshilfsteil mittels einer Schnappverbindung lösbar miteinander in Eingriff gebracht werden, und Arretieren der Tür beabstandet zu dem Rahmen durch das Fertigungshilfsmittel. Bevorzugt wird die Tür in einem Abstand von 6 mm bis 8 mm arretiert. Durch die Bereitstellung eines Fertigungshilfsmittels mit einem ersten und einem zweiten Fertigungshilfsteil, welche zum einen mit der Tür und zum anderen mit dem Rahmen gekoppelt sind und eine Schnappverbindung ausbilden, macht sich das Verfahren die in Bezug auf den ersten Aspekt der Erfindung beschriebenen Vorteile zu eigen. Bevorzugte Ausführungsbeispiele und Vorteile des ersten Aspekts der Erfindung sind ebenso bevorzugte Ausführungsbeispiele und Vorteile in Bezug auf den zweiten Aspekt der Erfindung und umgekehrt.

Das Verfahren umfasst ferner das selektive Arretieren der Schnappverbindung des ersten Fertigungshilfsteils und des zweiten Fertigungshilfsteils. Somit wird ein unbeabsichtigtes Lösen der Schnappverbindung im Betrieb aufgrund von Erschütterungen und dergleichen bei Bedarf verhindert.

Vorzugsweise umfasst das Verfahren ferner die Schritte: Bewegen der Tür in Richtung einer geöffneten Position der Tür, wobei das erste Fertigungshilfsteil und das zweite Fertigungshilfsteil außer Eingriff gebracht werden, elastisches Verformen des ersten Fertigungshilfsteils durch das Aufbringen einer ersten Kraft, insbesondere Lösekraft zum Entkoppeln des ersten Fertigungshilfsteils und des Rahmens, und elastisches Verformen des zweiten Fertigungshilfsteils durch Aufbringen einer zweiten Kraft, insbesondere Lösekraft und anschließendes Rotieren des zweiten Fertigungshilfsteils um eine Drehachse zum Entkoppeln des zweiten Fertigungshilfsteils mit der Tür. Somit kann durch das erfindungsgemäße Verfahren das Fertigungshilfsmittel zum Öffnen der Tür auf einfache Weise das Lösen der Schnappverbindung gewährleisten und gleichzeitig ein zerstörungsfreies Lösen des ersten Fertigungshilfsteils und des zweiten Fertigungshilfsteils sicherstellen.

Im Folgenden wird die Erfindung anhand von Beispielen unter Bezugnahme auf die beiliegenden Figuren beschrieben. Hierbei zeigen:
- Fig. 1:: ein Fertigungshilfsmittel im montierten Zustand in einer perspektivischen Ansicht;
- Fig. 2A:: ein erstes Fertigungshilfsteil für das Fertigungshilfsmittel gemäß Fig. 1 in einer perspektivischen Ansicht;
- Fig. 2B:: das erste Fertigungshilfsteil gemäß Fig. 2A in einer Seitenansicht;
- Fig. 3A:: ein zweites Fertigungshilfsteil des Fertigungshilfsmittels gemäß Fig. 1 in einer ersten perspektivischen Ansicht;
- Fig. 3B:: das zweite Fertigungshilfsteil gemäß Fig. 3A in einer zweiten perspektivischen Ansicht;
- Fig. 3C:: das zweite Fertigungshilfsteil gemäß Fig. 3A und 3B in einer Seitenansicht;
- Fig. 4:: ein erstes Fertigungshilfsmittel für ein Fertigungshilfsmittel gemäß der Erfindungin einer perspektivischen Ansicht; und
- Fig. 5:: ein Verfahren zum lösbaren Arretieren einer Tür an einem Rahmen einer Karosserie.

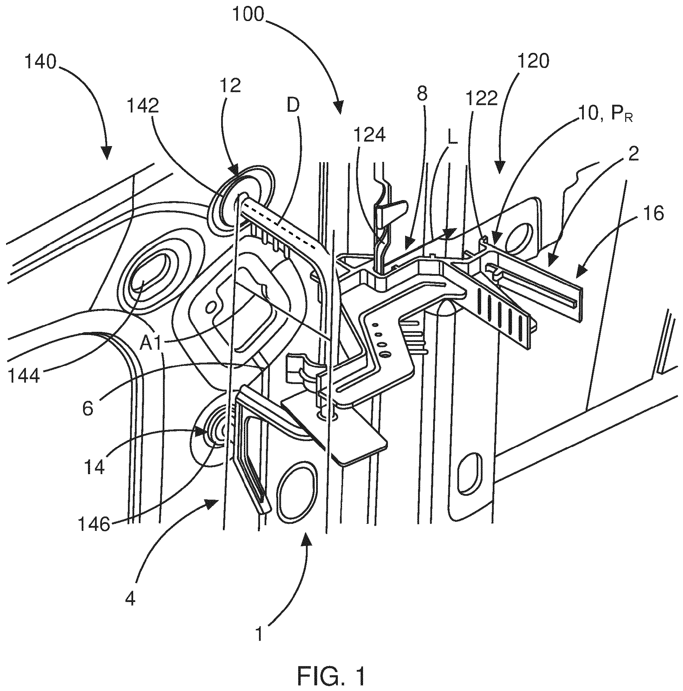

In Fig. 1 ist ein Fertigungshilfsmittel 1 beispielhaft im montierten Zustand in einer perspektivischen Ansicht gezeigt. Das Fertigungshilfsmittel 1 ist an einer Karosserie 100 montiert. Die Karosserie 100 umfasst einen Rahmen 120 und eine an dem Rahmen 120 befestigte Tür 140.

Das Fertigungshilfsmittel 1 ist dazu eingerichtet, die Tür 140 in einem definierten Abstand zu dem Rahmen 120 zu arretieren.

Zu diesem Zweck umfasst das Fertigungshilfsmittel ein erstes Fertigungshilfsteil 2 und ein zweites Fertigungshilfsteil 4, die mittels einer Schnappverbindung 6 miteinander im montierten Zustand in Eingriff sind. In dem gezeigten montierten Zustand ist das erste Fertigungshilfsteil 2 mit dem Rahmen 120 gekoppelt und das zweite Fertigungshilfsteil 4 ist mit der Tür 140 gekoppelt. Durch die Schnappverbindung 6 ist die Tür 140 auf einfache Weise reversibel mit dem Rahmen 120 koppelbar, wobei der Abstand, in welchem die Tür 140 relativ zu dem Rahmen 120 arretiert wird, durch das Fertigungshilfsmittel 1 vorgegeben ist. er Abstand beträgt bevorzugt 6 mm bis 8 mm.

Das erste Fertigungshilfsteil 2 umfasst eine Aufnahme 8 und ein Rastelement 10. Die Aufnahme 8 ist durch eine Linearbewegung in einer Längsachsrichtung mit einem Keder 124 des Rahmens 120 in Eingriff bringbar. Das Rastelement 10 ist ferner durch eine Bewegung relativ zu der Aufnahme 8, wobei es sich vorliegend um eine Schwenkbewegung handelt, mit einer Montage-Schnittstelle 122 des Rahmens 120 in Eingriff bringbar. Bei der Montage-Schnittstelle 122 handelt es sich vorliegend um eine Ausnehmung im Rahmen 120. Alternativ kann es sich aber auch um eine Hinterschneidung des Rahmens handeln, mit welcher das Rastelement 10 formschlüssig in Eingriff gelangt.

Das zweite Fertigungshilfsteil 4 umfasst ein erstes Montageteil 12 und ein beabstandet von dem ersten Montageteil 12 angeordnetes zweites Montageteil 14. Das erste Montageteil 12 ist mit einer ersten vorliegend ovalen Öffnung 142 der Tür 140 in Eingriff bringbar. Alternativ wäre das erste Montageteil 12 auch mit einer anderen Öffnung, wie beispielsweise der zweiten ovalen Öffnung 144 der Tür 140 in Eingriff bringbar.

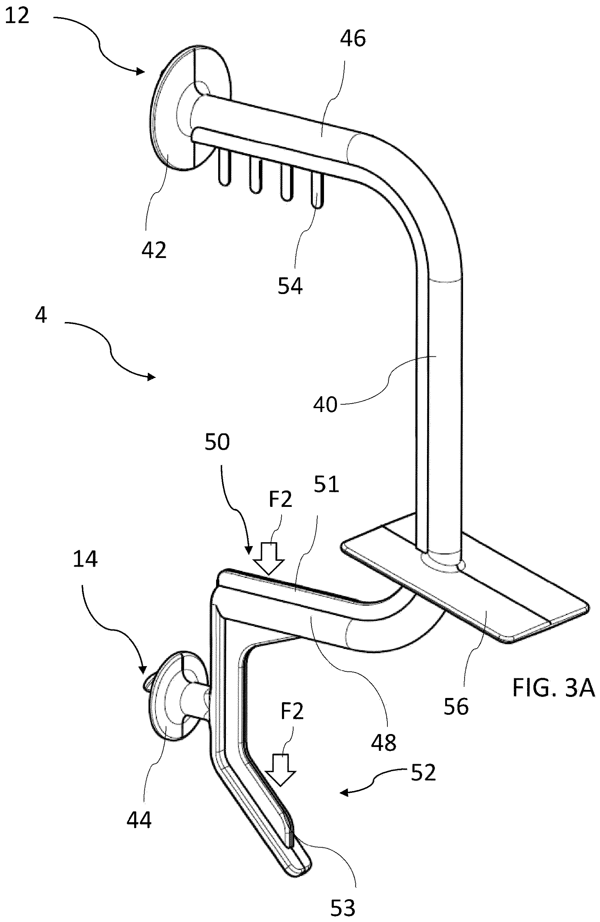

Das zweite Montageteil 14 ist mit einer Ausnehmung 146 der Tür 140 in Eingriff bringbar. Das erste Montageteil 12 ist zum Bringen des zweiten Fertigungshilfsteils 4 in den montierten Zustand mittels einer kombinierten Linearbewegung in Richtung einer Drehachse D, mit welcher das erste Montageteil 12 zumindest abschnittsweise in die erste ovale Öffnung 142 einbringbar ist, und eine anschließende Drehbewegung um die Drehachse D formschlüssig mit der ersten ovalen Öffnung 142 in Eingriff bringbar. Nachdem das erste Montageteil 12 mit der ersten ovalen Öffnung 142 in Eingriff gelangt ist, ist das zweite Montageteil 14 benachbart zu der Ausnehmung 146 angeordnet. In dieser Position kann das zweite Montageteil 14 durch Aufbringen einer Kraft F2 (vgl. Fig. 3A) auf einen Abschnitt des zweiten Fertigungshilfsteils 4 mittels einer Schnappverbindung formschlüssig mit der Ausnehmung 146 in Eingriff gebracht werden.

Das erste Fertigungshilfsteil 2 weist ferner einen Hebelmechanismus 16 auf, welcher dazu eingerichtet ist, das Rastelement 10 zu betätigen, insbesondere durch ein Verschwenken relativ zu der Aufnahme 8 mit der Montage-Schnittstelle 122 in Eingriff bzw. außer Eingriff zu bringen.

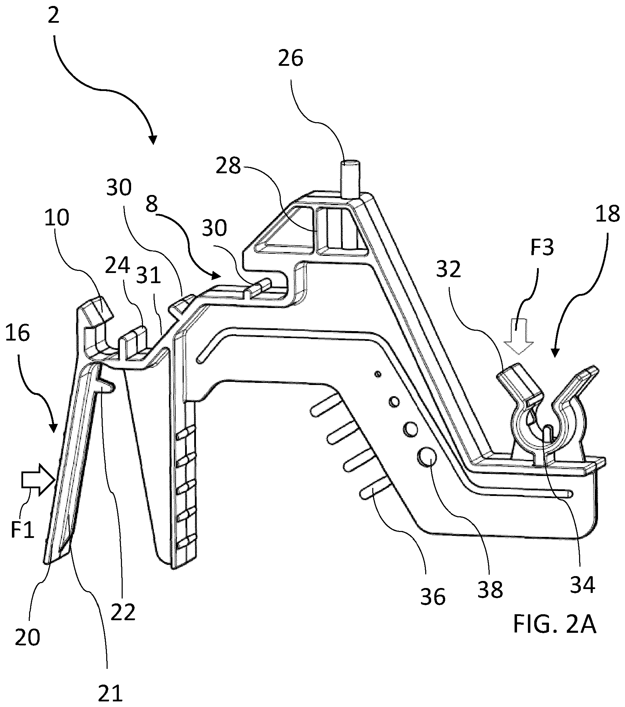

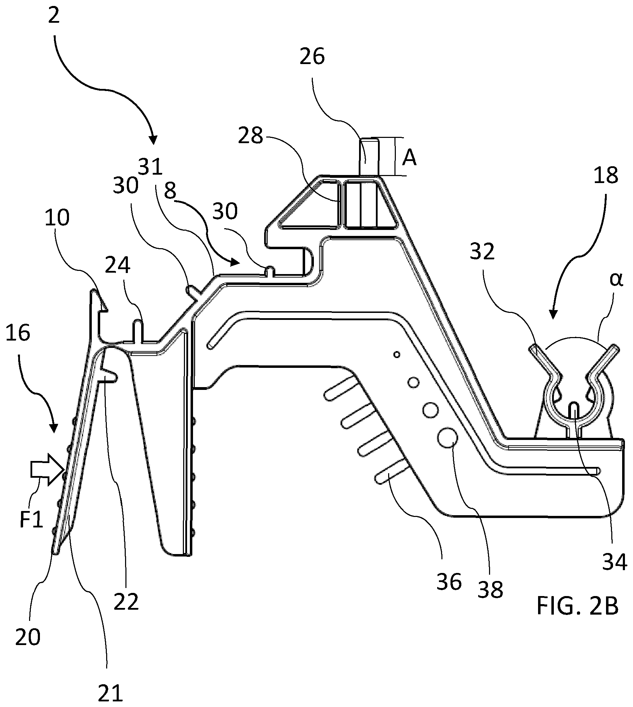

Die Fig. 2A und Fig. 2B zeigen das erste Fertigungshilfsteil 2 im Detail. Es wird auf die vorstehende Beschreibung der Fig. 1 bezuggenommen. Gleiche bzw. ähnliche Bauteile haben identische Bezugszeichen. Das erste Fertigungshilfsteil 2 weist eine Schnapp-Aufnahme 18 auf, welche mit dem zweiten Fertigungshilfsteil 4 zum Ausbilden der Schnappverbindung 6 (vgl. Fig. 1) in Eingriff bringbar ist.

Der Hebelmechanismus 16 weist einen mit dem Rastelement 10 gekoppelten Hebel 20 auf. Durch Aufbringen einer ersten Kraft F1, insbesondere einer Lösekraft auf den Hebel 20 ist das Rastelement 10 aus dem gekoppelten Zustand des ersten Fertigungshilfsteils 2 aus der Montage-Schnittstelle 122 heraus bewegbar, also aus einer Rastposition P_{R} (vgl. Fig. 1) heraus bewegbar, und insbesondere mit der Montage-Schnittstelle 122 außer Eingriff bringbar. Der Hebelmechanismus 16 weist ferner eine sich entlang des Hebels 20 erstreckende Verstärkungsrippe 21 auf. An einem proximalen Ende des Hebels 20, benachbart zu dem Rastelement 10, ist ein Abstandshalter 22 ausgebildet, welcher dazu eingerichtet ist, ein zu weites Öffnen bzw. Verschwenken des Rastelements 10 durch den Hebel 20 zu verhindern. Wie insbesondere Fig. 2B zeigt, weist das Rastelement 10 einen in Richtung der Aufnahme 8 zeigenden Vorsprung auf, welcher dazu eingerichtet ist, den Rand der vorliegend als Ausnehmung ausgebildeten Montage-Schnittstelle 122 in der Rastposition P_{R} (vgl. Fig. 1) zu hintergreifen und so formschlüssig mit dieser in Eingriff zu gelangen. Das zweite Fertigungshilfsteil 4 weist ferner ein benachbart zu dem Rastelement 10 angeordnetes Begrenzungselement 24 auf. Das Begrenzungselement 24 ist dazu eingerichtet, ein zu weites Vordringen des Rastelements 10 in die als Ausnehmung ausgebildete Montage-Schnittstelle 122 zu verhindern.

Weiterhin weist das erste Fertigungshilfsteil 2 eine Durchschlagsicherung 26 auf. Die Durchschlagsicherung 26 steht im montierten Zustand (vgl. Fig. 1) in Richtung des Rahmens 120 in einem Sicherungsabstand A vor und ist in eine korrespondierende Ausnehmung des Rahmens 120 einbringbar. Die Durchschlagsicherung 26 steht gegenüber dem Rahmen 120 dabei derart in Richtung der Tür 140 (vgl. Fig. 1) vor, dass die Tür 140 bei einer unbeabsichtigten Krafteinwirkung auf dieselbige in Richtung des Rahmens am vollständigen Schließen gehindert wird. Auf diese Weise können Schäden an der Lackierung verhindert werden. Wie insbesondere Fig. 2B zeigt, weist das erste Fertigungshilfsteil 2 ferner zwei Positionierelemente 30 auf, welche auf einer Kontaktfläche 31 angeordnet sind. Die Positionierelemente 30 verhindern dabei einen flächigen Kontakt der Kontaktfläche 31 mit dem Rahmen 120 (vgl. Fig. 1). Somit ist trotz etwaiger Toleranzen eine zuverlässige Anordnung des ersten Fertigungshilfsteils 2 gewährleistet und Schäden am Rahmen 120, insbesondere dem Keder 124, werden vermieden.

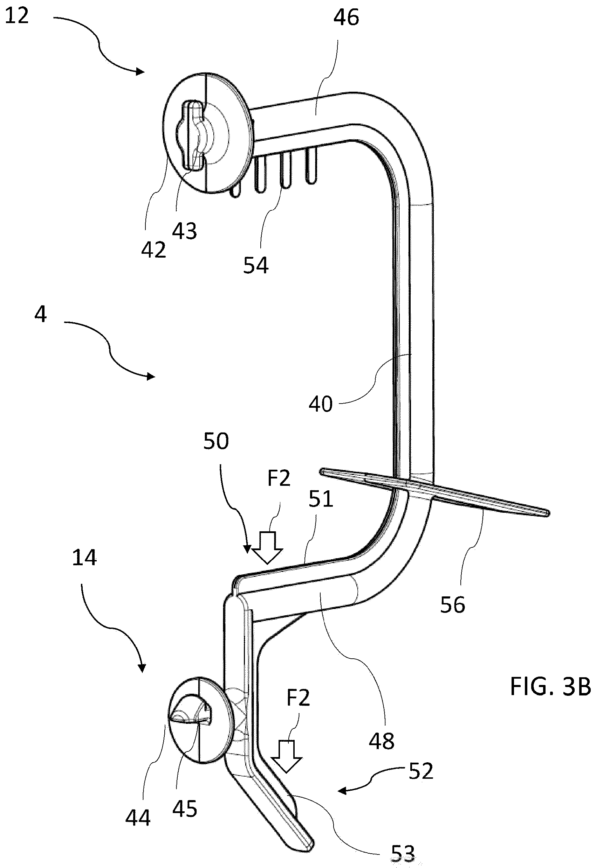

Die Schnapp-Aufnahme 18 weist einen Einführabschnitt 32 auf, welcher zwei Schenkel aufweist, die in einem Öffnungswinkel α relativ zueinander geneigt sind. Zum Ineingriffbringen des zweiten Fertigungshilfsteils 4 mit der Schnapp-Aufnahme 18 kommt das erste Fertigungshilfsteil 2 und insbesondere ein Kopplungsabschnitt 40 (vgl. Fig. 3A, 3B) desselbigen zunächst mit dem Einführabschnitt 32 in Kontakt. Der Kopplungsabschnitt 40 ist dazu eingerichtet, eine Verformungskraft F3 auf den Einführabschnitt 32 auszuüben, und die Schnapp-Aufnahme 18 elastisch zu verformen. Bei weiterer Krafteinwirkung auf das zweite Fertigungshilfsteil 4 in Richtung der Schnapp-Aufnahme 18 weitet sich der Einführabschnitt 32 somit auf, sodass der Kopplungsabschnitt 40 (vgl. Fig. 3A, 3B) formschlüssig mit der Schnapp-Aufnahme 18 in Eingriff bringbar ist. Die Schnapp-Aufnahme 18 weist ferner drei Stützteile 34 auf, mit welchen der Kopplungsabschnitt 40 in gekoppeltem Zustand in Kontakt ist. Auf diese Weise wird der Kopplungsabschnitt 40 mit einem minimalen Kontakt innerhalb der Schnapp-Aufnahme 18 von den Stützteilen 34 gehalten.

Weiterhin weist das erste Fertigungshilfsteil 2 eine Anzahl erster Prüfhilfen 36 auf, welche als vorstehende Stifte ausgebildet sind. Ein erfindungsgemäßes Fertigungshilfsmittel 1 (vgl. Fig. 1) ist dazu eingerichtet, eine Mehrzahl von Lackierprozessen zu durchlaufen. Ist das Fertigungshilfsmittel 1 beispielsweise dazu eingerichtet, insgesamt vier Lackierzyklen zu durchlaufen, so sind vier Stifte der ersten Prüfhilfe 36 vorgesehen. Nach jedem Lackierzyklus kann einer dieser Stifte abgebrochen werden, sodass die verbleibende Anzahl der Stifte die verbleibenden zulässigen Lackierzyklen angibt.

Weiterhin umfasst das erste Fertigungshilfsteil 2 eine zweite Prüfhilfen 38, welche als insgesamt vier Bohrungen unterschiedlicher Durchmesser ausgebildet ist. Die zweite Prüfhilfe 38 ist dabei so ausgebildet, dass nach dem Durchlaufen eines ersten Lackierzyklus die Bohrung mit dem geringsten Durchmesser durch den vorhandenen Lack vollständig verschlossen wird. Nach dem zweiten Lackierzyklus wird schließlich die Bohrung mit dem zweitkleinsten Durchmesser vollständig von Lack verschlossen. Es versteht sich, dass nach Durchlaufen des vierten Lackierzyklus schließlich auch die Bohrung mit dem größten Durchmesser der zweiten Prüfhilfe 38 vollständig verschlossen ist.

Die Fig. 3A bis Fig. 3C zeigen das zweite Fertigungshilfsteil 4 im Detail. Es wird auf die vorstehende Beschreibung der Fig. 1 bezuggenommen. Gleiche bzw. ähnliche Bauteile haben identische Bezugszeichen. Wie insbesondere der perspektivischen Ansicht gemäß Fig. 3B zu entnehmen ist, umfasst das erste Montageteil 12 eine Platte 42 mit kreisförmigem Querschnitt und ein Verriegelungsteil 43, welches mittig in der Platte 42 angeordnet ist. Die Platte 42 ist dazu eingerichtet, in Anlage mit einem Abschnitt der Tür 140 gebracht zu werden. Das Verriegelungsteil 43 ist dazu eingerichtet, in eine erste ovale Öffnung 142 der Tür 140 eingebracht zu werden und durch eine Drehbewegung um die Drehachse D (vgl. Fig. 1) formschlüssig mit der ersten ovalen Öffnung 142 in Eingriff gebracht zu werden.

Das zweite Montageteil 14 weist ebenfalls eine Platte 44 und ein Verriegelungsteil 45 auf. Die Platte 44 des zweiten Montageteils 14 wird im Folgenden als zweite Platte bezeichnet und das Verriegelungsteil 45 des zweiten Montageteils 14 wird im Folgenden als zweites Verriegelungsteil bezeichnet.

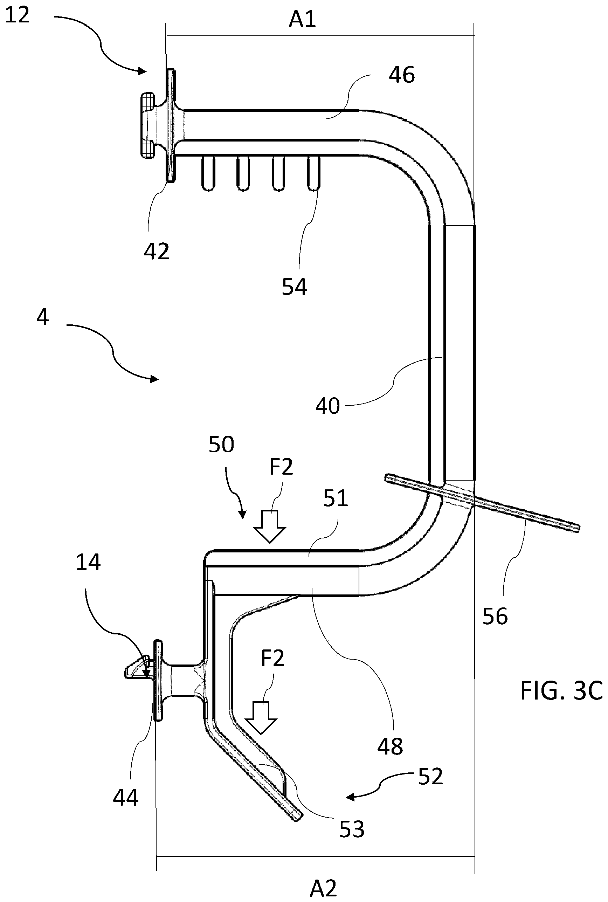

Das zweite Fertigungshilfsteil 4 weist ferner einen ersten Verbindungsabschnitt 46 angrenzend an das erste Montageteil 12 sowie einen zweiten Verbindungsabschnitt 48 zwischen dem Kopplungsabschnitt 40 und dem zweiten Montageteil 14 auf. Der Kopplungsabschnitt 40 verbindet den ersten Verbindungsabschnitt 46 und den sich im Wesentlichen parallel zu dem ersten Verbindungsabschnitt 46 erstreckenden zweiten Verbindungsabschnitt 48. Der zweite Verbindungsabschnitt 48 bildet gleichzeitig zumindest teilweise den Montageabschnitt 50 aus. Wie insbesondere die Seitenansicht gemäß Fig. 3C zeigt, weist der Kopplungsabschnitt 40 gegenüber dem ersten Montageteil 12 einen ersten Abstand A1 auf und gegenüber dem zweiten Montageteil 14 einen zweiten Abstand A2 auf. Gemäß einem nicht gezeigten Beispiel kann der erste Abstand A1 identisch zu dem zweiten Abstand A2 sein. Der erste bzw. zweite Abstand A1, A2 ist bevorzugt so gewählt, dass das zweite Fertigungshilfsteil 4 im montierten Zustand beabstandet zu dem Rahmen und insbesondere dem Türschweller angeordnet ist, sodass herabfallender Lack aus dem Bereich der Schnappverbindung 6 (vgl. Fig. 1) nicht in sichtbare Bereiche der Karosserie gelangen und auf diese Weise Schäden verursachen kann.

Wie insbesondere die Seitenansicht gemäß Fig. 3B zeigt, weist das zweite Verriegelungsteil 45 eine Rastnase auf. Diese Rastnase ist durch Aufbringen einer zweiten Kraft F2 auf einen ersten Montageabschnitt 50 bzw. einen zweiten Montageabschnitt 52 in eine Position bringbar, in welcher das zweite Verriegelungsteil 45 in die Ausnehmung 146 der Tür 140 einbringbar ist. Die minimale Kraft F2 zum Lösen und auch zum Ineingriffbringen der Rastnase ist dabei identisch. Anschließend bewegt sich das zweite Verriegelungsteil 45 in Richtung des ersten Montageteils 12, wobei die Rastnase des zweiten Verriegelungsteils 45 mit der Ausnehmung 146 formschlüssig in Eingriff gelangt. Der erste Montageabschnitt 50 weist eine erste Montagerippe 51 auf und der zweite Montageabschnitt 52 weist eine zweite Montagerippe 53 auf. Die Montagerippen 51, 53 sind dazu eingerichtet, den ersten Montageabschnitt 50 und den zweiten Montageabschnitt 52 zu verstärken und eine Beschädigung des zweiten Fertigungshilfsteils 4 bei wiederholter Krafteinwirkung zu verhindern.

Das zweite Fertigungshilfsteil 4 weist ferner einen ersten Verbindungsabschnitt 46 angrenzend an das erste Montageteil 12 sowie einen zweiten Verbindungsabschnitt 48 zwischen dem Kopplungsabschnitt 40 und dem zweiten Montageteil 14 auf. Der Kopplungsabschnitt 40 verbindet den ersten Verbindungsabschnitt 46 und den sich im Wesentlichen parallel zu dem ersten Verbindungsabschnitt 46 erstreckenden zweiten Verbindungsabschnitt 48. Der zweite Verbindungsabschnitt 48 bildet gleichzeitig zumindest teilweise den Montageabschnitt 50 aus.

Wie insbesondere die Seitenansicht gemäß Fig. 3C zeigt, weist der Kopplungsabschnitt 40 gegenüber dem ersten Montageteil 12 einen ersten Abstand A1 auf und gegenüber dem zweiten Montageteil 14 einen zweiten Abstand A2 auf.

Gemäß einem nicht gezeigten Beispiel kann der erste Abstand A1 identisch zu dem zweiten Abstand A2 sein. Der erste bzw. zweite Abstand A1, A2 ist bevorzugt so gewählt, dass das zweite Fertigungshilfsteil 4 im montierten Zustand beabstandet zu dem Rahmen und insbesondere dem Türschweller angeordnet ist, sodass herabfallender Lack aus dem Bereich der Schnappverbindung 6 (vgl. Fig.16) nicht in sichtbare Bereiche der Karosserie gelangen und auf diese Weise Schäden verursachen kann.

Zur Vermeidung von Schäden, insbesondere im Bereich des Schwellers (nicht gezeigt) weist das zweite Fertigungshilfsteil 4 ferner ein Ablenkelement 56 auf. Das Ablenkelement 56 ist im Bereich des Kopplungsabschnitts 40 angeordnet und im montierten Zustand unterhalb der Schnappverbindung 6 (vgl. Fig. 1) positioniert. Herabfallender Lack, welcher sich beim Öffnen der Tür 140 von der Schnappverbindung 6 (vgl. Fig. 1) löst, fällt zunächst auf das Ablenkelement 56 und wird von diesem in Richtung des Fahrzeuginneren, weg von dem Rahmen 120 und der Tür 140 geleitet. In diesem Bereich wird üblicherweise anschließend ein Teppich verlegt, sodass herabfallende Lackreste keine sichtbaren Schäden bzw. Verschmutzungen an der Karosserie verursachen.

Entsprechend dem ersten Fertigungshilfsteil 2 weist auch das zweite Fertigungshilfsteil 4 eine Prüfhilfe, nämlich die dritte Prüfhilfe 54 auf. Die dritte Prüfhilfe 54 umfasst vier Stifte, welche vorliegend an dem ersten Verbindungsabschnitt 46 angeordnet sind. Die Stifte sind derart ausgebildet, dass sie in einfachere Weise abgebrochen werden können, um die Anzahl der durchlaufenen Lackierzyklen anzuzeigen.

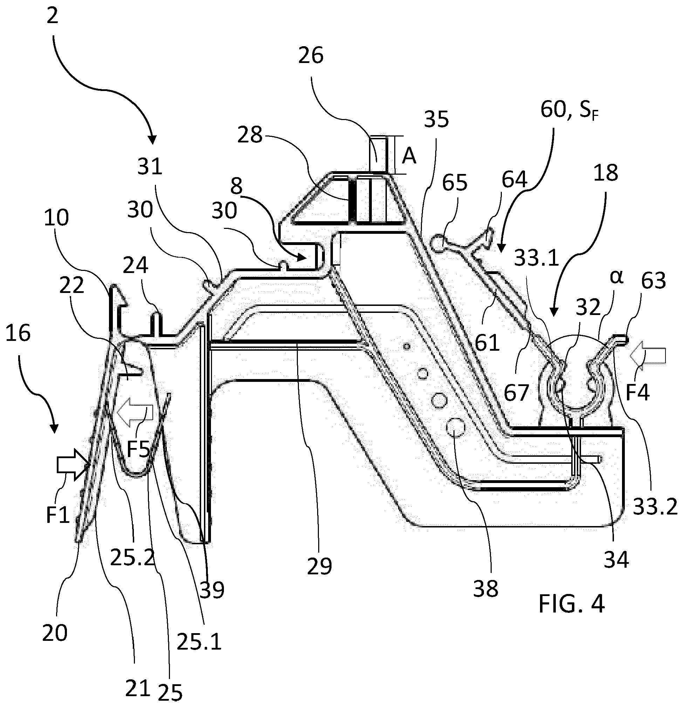

Fig. 4 zeigt eine erfindungsgemäße Ausführungsform des ersten Fertigungshilfsteils 2, welches gemeinsam mit einem zweiten Fertigungshilfsteil 4 (vgl. Fig. 3a bis 3c) ein Fertigungshilfsmittel 1 ausbildet. Zur Vermeidung von Wiederholungen wird lediglich auf die Unterschiede zu dem in den Fig. 2a und 2b gezeigten ersten Fertigungshilfsteil 2 eingegangen. Gleiche bzw. ähnliche Bauteile haben vorliegend identische Bezugszeichen und es wird auf die Beschreibung des ersten Fertigungshilfsteils 2 gemäß Fig. 2a und 2b Bezug genommen.

Der Hebelmechanismus 16 des ersten Fertigungshilfsteils 2 weist vorliegend ein Federelement 25 auf, welches mit dem Rastelement 10 kooperiert. Das Federelement 25 ist dazu eingerichtet, eine Federkraft F5 zumindest mittelbar auf das Rastelement 10 aufzubringen, derart, dass die Federkraft F5 auf das Rastelement 10 eine in Richtung der Rastposition P_{R} (vgl. Fig. 1) wirkende Kraft erfährt.

Das Federelement 25 weist hierfür einen ersten Schenkel 25.1 und einen zweiten Schenkel 25.2 auf und ist im Wesentlichen u-förmig bzw. v-förmig ausgebildet. Das Federelement 25 ist dabei zu einem reversiblen Verformen zwischen einer u-förmigen Konfiguration, in welcher das Federelement 25 durch die auf den Hebel 20 aufgebrachte erste Kraft F1 verformt wird, sowie einer zweiten v-förmigen Konfiguration in welcher die Federkraft F5 größer als die auf den Hebel 20 wirkende Lösekraft F1 ist. In der in Fig. 4 gezeigten Ansicht übersteigt die Federkraft F5 somit die Lösekraft F1. Der in der gezeigten Ansicht linke Schenkel 25.2 des Federelements 25 ist dabei mit dem Hebel 20 in Anlage und der in der Ansicht rechte Schenkel 25.1 ist mit einem korrespondierenden Stützabschnitt 39 in Anlage und bevorzugt mit diesem derart in Eingriff, dass der rechte Schenkel 25.1 am ersten Fertigungshilfsteil 2 fixiert ist. Dabei ist ferner der linke Schenkel 25.2 relativ zu dem Hebel 20 bewegbar und zum Aufbringen der Federkraft F5 auf den Hebel 20 eingerichtet ist. Durch das Aufbringen der Federkraft F5 auf den Hebel 20 wird das Rastelement 10 in die Rastposition P_{R} (vgl. Fig. 1) verschwenkt und erfährt somit eine in Richtung der Rastposition P_{R} (vgl. Fig. 1) wirkende Kraft. Die Federkraft F5 wirkt somit als eine Rückstellkraft auf das Rastelement 10, sodass dieses für den Fall, dass keine ausreichend hohe Lösekraft F1 auf den Hebel 20 aufgebracht wird, selbstständig in die Rastposition P_{R} (vgl. Fig. 1) zurückkehrt.

Weiterhin weist das erste Fertigungshilfsteil 2 gemäß Fig. 4 eine alternativ oder ergänzend zu der ersten Verstärkungsrippe 28 vorgesehene zweite Verstärkungsrippe 29 auf. Die zweite Verstärkungsrippe 29 erstreckt sich von der Schnapp-Aufnahme 18 hin zu der Aufnahme 8 einerseits und bevorzugt andererseits in Richtung des Rastelements 10 und des Hebelmechanismus 16. Die über die Schnapp-Aufnahme 18 in das erste Fertigungshilfsteil 2 eingeleiteten Kräfte werden somit über die Aufnahme 8 und das Rastelement 10, welche mit der zweiten Verstärkungsrippe b 29 kooperieren, in den Rahmen 120 (vgl. Fig. 1) eingeleitet.

Die Verstärkungsrippe 29 ist bevorzugt integral mit dem übrigen Fertigungshilfsteil 2 ausgebildet und bevorzugt in einem Spritzgussprozess hergestellt.

Weiterhin umfasst das zweite Fertigungshilfsteil 2 einen Sicherungsmechanismus 60, welcher dazu eingerichtet ist, die Schnappverbindung 6 (vgl. Fig. 1) zwischen dem ersten Fertigungshilfsteil 2 und dem zweiten Fertigungshilfsteil 4 (vgl. Fig. 1 und Fig. 3a bis 3c) selektiv zu sichern bzw. arretieren.

Der Sicherungsmechanismus 60 ist dabei vorliegend dem ersten Fertigungshilfsteil 2 zugeordnet und mit diesem verbunden.

Der Sicherungsmechanismus 60 umfasst bevorzugt einen Bügel 61, welcher in einer Freigabestellung S_{F} gezeigt ist. Weiterhin weist der Sicherungsmechanismus 60 ein Verriegelungselement 63 auf, welches dazu eingerichtet ist, in einer Sperrstellung (nicht gezeigt) mit dem Bügel 61 in Eingriff zu gelangen, derart, dass eine Hemmkraft F4 auf die Schnapp-Aufnahme 18 bzw. den Einführabschnitt 32 wirkt. Die Hemmkraft F4 wirkt damit entgegen der Verformungskraft F3 (vgl. Fig. 2b). Der Bügel 61 ist dazu eingerichtet, in der Freigabestellung S_{F} an zumindest eine Anlagefläche 35 des ersten Fertigungshilfsteils 2 anzulegen und sich so an dieser abzustützen. Ein Überstrecken oder Abreißen des Bügels 61 im Betrieb kann somit vermieden werden.

Der Einführabschnitt 32 weist vorliegend einen ersten Schenkel 33.1 und einen zweiten Schenkel 33.2 auf, die beabstandet zueinander angeordnet sind und sich in distaler Richtung weiter voneinander entfernen. Dem ersten Schenkel 33.1 ist der Bügel 61 zugeordnet, wobei der Bügel 61 fest mit dem ersten Schenkel 33.1 an dessen distalem Ende verbunden ist. Das Verriegelungselement 63 ist hingegen dem zweiten Schenkel 33.2 zugeordnet und bildet einen Vorsprung an dessen distalem Ende.

Der Bügel 61 umfasst eine Verriegelungsnase 61 und einen Griff 65 zum Verschwenken des Bügels 61 in Richtung des Verriegelungselements 63. Der Bügel 61 ist dabei über einen elastischen Bereich 67 schwenkbar mit dem ersten Schenkel 33.1 verbunden. In diesem Bereich kann bevorzugt auch ein Scharnier oder eine elastische Verstärkung vorgesehen sein.

Durch das Verschwenken des Bügels 61 mittels des Griffs 65 in Richtung des Verriegelungselements 63 gelangt die Verriegelungsnase 64 mit dem Verriegelungselement 63 in Eingriff, wobei zum Ineingriffbringen der Bügel 61 bevorzugt über den Griff 65 elastisch verformt wird. Durch den Bügel 61 und das Eingreifen der Verriegelungsnase 64 in das Verriegelungselement 63 würde der Kopplungsabschnitt 40 des zweiten Fertigungshilfsteils 4 (vgl. 3a bis 3c) in der Schnapp-Aufnahme 18 arretiert werden. Somit würde eine in Fig. 4 nach oben wirkende Kraft nicht ausreichen, um den Kopplungsabschnitt 40 und die Schnapp-Aufnahme 18 außer Eingriff zu bringen. Vielmehr müsste zunächst die Verriegelungsnase 64 von dem Verriegelungselement 63 durch Aufbringen einer Kraft auf den Griff 65 gelöst werden.

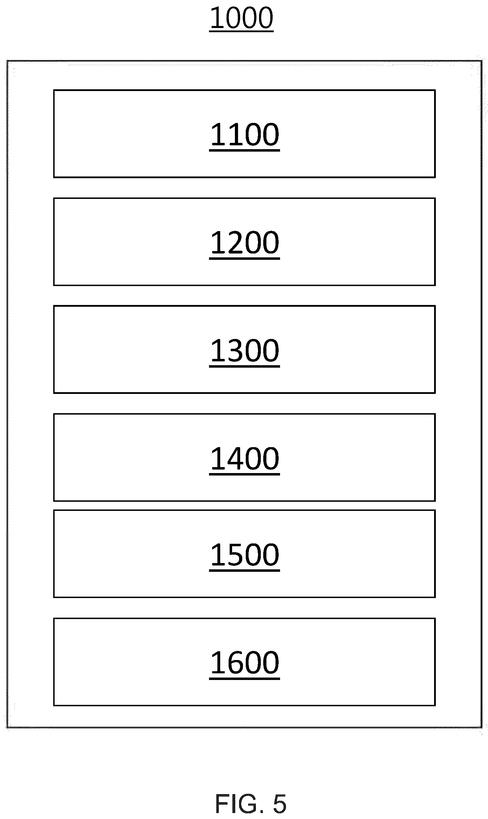

Fig. 5 zeigt ein Flussdiagramm eines Verfahrens 1000 zum lösbaren Arretieren einer Tür 140 an einem Rahmen 120 einer Karosserie 100 (vgl. Fig. 1). Das Verfahren 1000 umfasst in einem ersten Schritt 1100 das Bereitstellen eines Fertigungshilfsmittels 1 mit einem ersten Fertigungshilfsteil 2 und einem zweiten Fertigungshilfsteil 4, die bevorzugt entsprechend der in den Fig. 1 bis 4 gezeigten Ausführungsformen ausgebildet sind. In einem zweiten Schritt 1200 umfasst das Verfahren 1000 das lösbare Koppeln des ersten Fertigungshilfsteils 2 mit dem Rahmen 120 und in einem dritten Schritt 1300 das lösbare Koppeln des zweiten Fertigungshilfsteils 4 mit der Tür 140. In einem vierten Schritt 1400 umfasst das Verfahren 1000 das Bewegen der Tür 140 in Richtung einer geschlossenen Position der Tür 140, wobei das erste Fertigungshilfsteil 2 und das zweite Fertigungshilfsteil 4 mittels einer Schnappverbindung 6 lösbar miteinander in Eingriff gebracht werden. In einem fünften Schritt 1500 fasst das Verfahren 1000 das Arretieren der Tür 140 beabstandet zu dem Rahmen 120 durch das Fertigungshilfsmittel 1. Das Verfahren 1000 umfasst ferner einen sechsten Schritt 1600 zum selektiven Arretieren der Schnappverbindung 6 des ersten Fertigungshilfsteils 2 und des zweiten Fertigungshilfsteils 4, welches mittels des Sicherungsmechanismus 60 gemäß Fig. 4 erfolgt.

### Bezugszeichenliste

- 1: Fertigungshilfsmittel
- 2: erstes Fertigungshilfsteil
- 4: zweites Fertigungshilfsteil
- 6: Schnappverbindung
- 8: Aufnahme
- 10: Rastelement
- 12: erstes Montageteil
- 14: zweites Montageteil
- 16: Hebelmechanismus
- 18: Schnapp-Aufnahme
- 20: Hebel
- 21: Verstärkungsrippe Hebel
- 22: Abstandshalter
- 24: Begrenzungselement
- 25: Federelement
- 25.1, 25.2: Schenkelabschnitte
- 26: Durchschlagsicherung
- 28: Verstärkungsrippe (Durchschlagsicherung)
- 29: (zweite) Verstärkungsrippe
- 30: Positionierelement
- 31: Kontaktfläche
- 32: Einführabschnitt
- 33.1: erster Schenkel
- 33.2: zweiter Schenkel
- 34: Stützteile
- 35: Anlagefläche
- 36: erste Prüfhilfen
- 38: zweite Prüfhilfen
- 39: Stützabschnitt
- 40: Kopplungsabschnitt
- 42: erste Auflageplatte
- 43: erstes Verriegelungsteil
- 44: zweite Auflageplatte
- 45: zweites Verriegelungsteil
- 46: oberer Verbindungsabschnitt
- 48: unterer Verbindungsabschnitt
- 50: erster Montageabschnitt
- 51: erste Montagerippe
- 52: zweiter Montageabschnitt
- 53: zweite Montagerippe
- 54: dritte Prüfhilfen
- 56: Ablenkelement
- 60: Sicherungsmechanismus
- 61: Bügel
- 63: Verriegelungselement
- 64: Verriegelungsnase
- 65: Griff
- 67: elastischer Bereich
- 100: Karosserie
- 120: Rahmen
- 122: Montage-Schnittstelle, Ausnehmung, Hinterschneidung
- 124: Keder
- 140: Tür
- 142: erste ovale Öffnung in der Tür
- 144: zweite ovale Öffnung in der Tür
- 146: Ausnehmung
- L: Längsrichtung
- F1: erste Kraft, Lösekraft
- F2: zweite Kraft, Lösekraft
- F3: Verformungskraft
- F4: Hemmkraft
- F5: Federkraft
- A: Sicherungsabstand
- A1: erster Abstand
- A2: zweiter Abstand
- D: Drehachse
- α: Öffnungswinkel

## Patentansprüche

1. Fertigungshilfsmittel (1) für die Lackierung einer Karosserie (100), insbesondere einer Kraftfahrzeug-Karosserie (100), mit einem Rahmen (120) und einer an dem Rahmen (120) montierten Tür (140), wobei das Fertigungshilfsmittel (1) umfasst:
- ein erstes Fertigungshilfsteil (2) zur lösbaren Kopplung mit dem Rahmen (120); und
- ein zweites Fertigungshilfsteil (4) zur lösbaren Kopplung mit der Tür (140);
wobei das erste Fertigungshilfsteil (2) und das zweiten Fertigungshilfsteil dazu eingerichtet sind, mittels einer Schnappverbindung (6) lösbar miteinander in Eingriff gebracht zu werden und in einem montierten Zustand, in welchem das erste Fertigungshilfsteil (2) mit dem Rahmen (120) und das zweite Fertigungshilfsteil (4) mit der Tür (140) gekoppelt ist, die Tür (140) beabstandet zu dem Rahmen (120) zu arretieren,
**dadurch gekennzeichnet, dass** das Fertigungshilfsmittel (1) einen Sicherungsmechanismus (60) umfasst, welcher dazu eingerichtet ist, die Schnappverbindung (6) zwischen dem ersten Fertigungshilfsteil (2) und dem zweiten Fertigungshilfsteil (4) selektiv zu arretieren.

2. Fertigungshilfsmittel (1) nach Anspruch 1,
wobei das erste Fertigungshilfsteil (2) den Sicherungsmechanismus (60) umfasst.

3. Fertigungshilfsmittel (1) nach Anspruch 2,
wobei der Sicherungsmechanismus (60) dem ersten Fertigungshilfsteil (2) zugeordnet, insbesondere mit dem ersten Fertigungshilfsteil (2) verbunden ist.

4. Fertigungshilfsmittel (1) nach Anspruch 1, 2 oder 3,
wobei die Schnappverbindung (6) durch eine Schnapp-Aufnahme (18) und einen mit der Schnapp-Aufnahme (18) in Eingriff bringbaren Kopplungsabschnitt (40) ausgebildet wird,
wobei die Schnapp-Aufnahme (18) dazu eingerichtet ist, sich zum selektiven Aufnehmen und Freigeben des Kopplungsabschnitts (40) reversibel elastisch zu verformen, und der Sicherungsmechanismus (60) in eine Sperrstellung bringbar ist, in welcher er dazu eingerichtet ist, das elastische Verformen der Schnapp-Aufnahme (18) zum Freigeben des Kopplungsabschnitts (40) zu hemmen und/oder zu sperren.

5. Fertigungshilfsmittel (1) nach Anspruch 4,
wobei das erste Fertigungshilfsteil (2) einen mit der Schnapp-Aufnahme (18) verbundenen Einführabschnitt (32) aufweist, und der Kopplungsabschnitt (40) dazu eingerichtet ist, eine Verformungskraft (F3) auf den Einführabschnitt (32) auszuüben, um die Schnapp-Aufnahme (18) elastisch zu verformen, und
der Sicherungsmechanismus (60) dazu eingerichtet ist, eine entgegen der Verformungskraft wirkende Hemmkraft (F4) auf den Einführabschnitt (32) aufzubringen.

6. Fertigungshilfsmittel (1) nach Anspruch 4 oder 5,
wobei der Sicherungsmechanismus (60) einen von einer Freigabestellung (FS) in die Sperrstellung schwenkbaren Bügel (61) und ein mit dem Bügel (61) in der Sperrstellung in Eingriff bringbares Verriegelungselement (63) aufweist.

7. Fertigungshilfsmittel (1) nach Anspruch 6,
wobei der Einführabschnitt (32) einen ersten Schenkel (33.1) und zweiten Schenkel (33.2) aufweist, wobei der Bügel (61) dem ersten Schenkel (33.1) zugeordnet ist und das Verriegelungselement (63) dem zweiten Schenkel (33.2) zugeordnet ist, und der Bügel (61) in der Sperrstellung zum Hemmen der elastischen Verformung des ersten Schenkels (33.1) relativ zu dem zweiten Schenkel (33.2) mit dem Verriegelungselement (63) in Eingriff bringbar ist.

8. Fertigungshilfsmittel (1) nach Anspruch 6 oder 7,
wobei der Bügel (61) dazu eingerichtet ist, sich in der Freigabestellung (FS) an zumindest einer Anlagefläche (35) des ersten Fertigungshilfsteils (2) abzustützen.

9. Fertigungshilfsmittel (1) nach einem der vorstehenden Ansprüche,
wobei das erste Fertigungshilfsteil (2) einen Hebelmechanismus (16) und ein mit dem Hebelmechanismus (16) kooperierendes Rastelement (10) umfasst,
welches durch eine elastische Verformung des ersten Fertigungshilfsteils (2) in eine Rastposition und eine Löseposition bringbar und dazu eingerichtet ist, in der Rastposition in eine Montage-Schnittstelle (122) des Rahmens (120) einzugreifen und in der Löseposition die Montage-Schnittstelle (122) freizugeben,
wobei der Hebelmechanismus (16) einen mit dem Rastelement (10) gekoppelten Hebel (20) aufweist und dazu eingerichtet ist, durch Aufbringen einer Lösekraft (F1) auf den Hebel (20), das Rastelement (10) von der Rastposition in die Löseposition zu bringen, und
wobei der Hebelmechanismus (16) ein mit dem Rastelement (10) kooperierendes Federelement (25) aufweist, das dazu eingerichtet ist, eine in Richtung der Rastposition wirkende Federkraft (F5) zumindest mittelbar auf das Rastelement (10) aufzubringen.

10. Fertigungshilfsmittel (1) nach Anspruch 9,
wobei das Federelement (25) dazu eingerichtet ist, die Federkraft (F5) auf den Hebel aufzubringen, derart, dass der Hebel (20) die Federkraft (F5) auf das Rastelement (10) überträgt, und die Lösekraft (F1) zum Bringen des Rastelements (10) in die Löseposition die Federkraft (F5) überwinden muss.

11. Fertigungshilfsmittel (1) nach Anspruch 9 oder 10,
wobei das Federelement (25) zwischen dem Hebel (20) und einer gegenüberliegenden Stützfläche (39) angeordnet und im wesentlichen U-förmig ausgebildet ist, mit zwei Schenkelabschnitten (25.1, 25.2), von denen einer mit dem Hebel (20) in Anlage ist.

12. Fertigungshilfsmittel (1) nach einem der vorstehenden Ansprüche,
wobei das erste Fertigungshilfsteil (2) eine Verstärkungsrippe (29) aufweist, die sich von der Schnapp-Aufnahme (18) zum Rastelement (10) erstreckt, und dazu eingerichtet ist, Kräfte von der Schnapp-Aufnahme (18) über das Rastelement (10) in den Rahmen (120) zu leiten.

13. Fertigungshilfsmittel (1) nach Anspruch 12,
wobei das erste Fertigungshilfsteil (2) eine formschlüssig mit dem Rahmen (120) in Eingriff bringbare Aufnahme (8) aufweist, und die Verstärkungsrippe (29) sich von der Schnapp-Aufnahme (18) zum Rastelement (10) und zur Aufnahme (8) erstreckt, und dazu eingerichtet ist, Kräfte von der Schnapp-Aufnahme (18) über das Rastelement (10) und die Aufnahme (8) in den Rahmen (120) zu leiten.

14. Verfahren zum lösbaren Arretieren einer Tür (140) an einem Rahmen (120) einer Karosserie (100), insbesondere einer Kraftfahrzeug-Karosserie (100), mit den Schritten:
- Bereitstellen eines Fertigungshilfsmittels (1) nach einem der Ansprüche 1 bis 13,
- lösbares Koppeln des erstes Fertigungshilfsteils (2) mit dem Rahmen (120),
- lösbares Koppeln des zweiten Fertigungshilfsteils (4) mit der Tür (140),
- Bewegen der Tür (140) in Richtung einer geschlossenen Position der Tür (140), wobei das erste Fertigungshilfsteil (2) und das zweiten Fertigungshilfsteil mittels einer Schnappverbindung (6) lösbar miteinander in Eingriff gebracht werden, und
- Arretieren der Tür (140) beabstandet zu dem Rahmen (120) durch das Fertigungshilfsmittel (1),
- Selektives Arretieren der Schnappverbindung (6) des ersten Fertigungshilfsteils (2) und des zweiten Fertigungshilfsteils (4).

## Claims

1. Production resource (1) for painting a vehicle body (100), in particular a motor vehicle body (100), having a frame (120) and a door (140) mounted on the frame (120), wherein the production resource (1) comprises:
- a first production resource part (2) for releasable coupling to the frame (120); and
- a second production resource part (4) for releasable coupling to the door (140), having a first assembly part (12) that is configured to be engaged in an interlocking manner with the door (140) and/or a second assembly part (14) that is configured to form a snap connection (6) with the door (140);
wherein the first production resource part (2) and the second production resource part (4) are configured to be releasably engaged with each other by means of a snap-fit connection (6) and, in a mounted state in which the first production resource part (2) is coupled to the frame (120) and the second production resource part (4) is coupled to the door (140), to lock the door (140) at a distance from the frame (120),
**characterized in that** the production resource (1) has a safety mechanism (60), configured to selektively lock the snap connection (6) between the first production resource part (2) and the second production resource part (4).

2. Production resource (1) according to claim 1,
wherein between the first production resource part (2) comprises the safety mechanism (60).

3. Production resource (1) according to claim 2,
wherein the safety mechanism (60) is associated to the first production resource part (2), in particular coupled with the first production resource part (2).

4. Production resource (1) according to claim 1, 2 or 3,
wherein the snap connection (6) is formed by a snap receiver (18) and a coupling section (40) being engageable with the snap receiver (18), wherein the snap receiver (18) is configured to deform reversibly and elastically in order to receive the coupling section (40), and the safety mechanism can be brought into a locking position in which it is configured to inhibit and/or lock the elastic deformation of the snap receiver (18) for releasing the coupling section (40).

5. Production resource (1) according to claim 4,
wherein the first production resource part (2) comprises an insertion portion (32) connected to the snap receiver (18), and the coupling portion (40) is configured to exert a force on the insertion portion (32) to reversibly elastically deform the snap receiver (18), and
the safety mechanism (60) being configured to apply a restraining force (F4) acting against the deformation force to the insertion portion (32).

6. Production resource (1) according to claim 4 or 5,
wherein the safety mechanism (60) has a bracket (61) which can be pivoted from a release position (FS) into the locking position and a locking element (63) which can be brought into engagement with the bracket (61) in the locking position.

7. Production resource (1) according to claim 6,
wherein the insertion portion (32) has a first leg (33.1) and a second leg (33.2), wherein the bracket (61) is associated with the first leg (33.1) and the locking element (63) is associated with the second leg (33.2), and the bracket (61) can be brought into engagement with the locking element (63) in the locking position for inhibiting the elastic deformation of the first leg (33.1) relative to the second leg (33.2).

8. Production resource (1) according to claim 6 or 7,
wherein the bracket (61) is configured to rest on at least one contact surface (35) of the first production resource part (2) in the release position (FS).

9. Production resource (1) according to any one of the preceding claims,
wherein the first production resource part (2) has a lever mechanism (16) and a latching element (10) cooperating with the lever mechanism (16),
wherein the latching element (10) can be brought into
engagement with the assembly interface (122) in a latching position by an elastic deformation of the first production resource part (2), in such a way that the latching element (10) can be brought into engagement with the mounting interface (122) of the frame (120) by a movement which has at least one component of movement orthogonal to the longitudinal direction (L) relative to the receiver (8),
which can be brought into a latching position and a release position by elastic deformation of the first production resource part (2) and is set up to engage in a mounting interface (122) of the frame (120) in the latching position and to release the mounting interface (122) in the release position,
wherein the lever mechanism (16) comprises a lever (20) coupled to the latching element (10) and is adapted to move the latching element (10) from the latching position to the release position by applying a release force (F1) to the lever (20), and
wherein the lever mechanism (16) has a spring element (25) which cooperates with the latching element (10) and is arranged to apply a spring force (F5) acting in the direction of the latching position at least indirectly to the latching element (10).

10. Production resource (1) according to claim 9,
wherein the spring element (25) is configured to apply the spring force (F5) to the lever such that the lever (20) transmits the spring force (F5) to the latching element (10), and the release force (F1) must overcome the spring force (F5) to bring the latching element (10) into the release position.

11. Production resource (1) according to claim 9 or 10,
wherein the spring element (25) is arranged between the lever (20) and an opposite supporting surface (39) and is substantially U-shaped, with two leg portions (25.1, 25.2), one of which is in contact with the lever (20).

12. Production resource (1) according to any one of the preceding claims,
wherein the first production resource part (2) has a reinforcing rib (29) which extends from the snap receiver (18) to the latching element (10) and is configured to transfer forces from the snap receiver (18) via the latching element (10) into the frame (120).

13. Production resource (1) according to claim 12,
wherein the first production resource part (2) has a receiver (8) that can be brought into form-fitting engagement with the frame (120), and the reinforcing rib (29) extends from the snap receiver (18) to the latching element (10) and to the receiver (8), and is configured to transfer forces from the snap receiver (18) via the latching element (10) and the receiver (8) into the frame (120).

14. Method for releasably locking a door (140) to a frame (120) of a car body (100), in particular a motor vehicle body (100), comprising the steps of:
- Providing a production resource (1) according to one of claims 1 to 13,
- releasably coupling the first production resource part (2) to the frame (120),
- releasably coupling the second production resource part (4) to the door (140),
- moving the door (140) in the direction of a closed position of the door (140), the first production resource part (2) and the second production resource part being releasably engaged with one another by means of a snap connection (6), and
- locking the door (140) at a distance from the frame (120) by the production resource (1),
- selectively locking the snap connection (6) of the first production resource part (2) and the second production resource part (4).

## Revendications

1. Auxiliaire de fabrication (1) pour la mise en peinture d'une carrosserie (100), en particulier d'une carrosserie de véhicule à moteur (100), avec un cadre (120) et une porte (140) montée sur le cadre (120), dans lequel l'auxiliaire de fabrication (1) comprend :
- une première pièce auxiliaire de fabrication (2) à accoupler de manière détachable au cadre (120) ; et
- une deuxième pièce auxiliaire de fabrication (4) à accoupler de manière détachable à la porte (140) ;
dans lequel la première pièce auxiliaire de fabrication (2) et la deuxième pièce auxiliaire de fabrication sont configurées pour être amenées en prise l'une avec l'autre de manière détachable au moyen d'une liaison à encliquetage (6) et pour arrêter la porte (140) à distance du cadre (120) dans un état monté dans lequel la première pièce auxiliaire de fabrication (2) est accouplée au cadre (120) et la deuxième pièce auxiliaire de fabrication (4) à la porte (140),
**caractérisé en ce que** l'auxiliaire de fabrication (1) comprend un mécanisme de blocage (60), lequel est configuré pour arrêter sélectivement la liaison à encliquetage (6) entre la première pièce auxiliaire de fabrication (2) et la deuxième pièce auxiliaire de fabrication (4).

2. Auxiliaire de fabrication (1) selon la revendication 1,
dans lequel la première pièce auxiliaire de fabrication (2) comprend le mécanisme de blocage (60).

3. Auxiliaire de fabrication (1) selon la revendication 2,
dans lequel le mécanisme de blocage (60) est associé à la première pièce auxiliaire de fabrication (2), notamment relié à la première pièce auxiliaire de fabrication (2).

4. Auxiliaire de fabrication (1) selon la revendication 1, 2 ou 3,
dans lequel la liaison à encliquetage (6) est réalisée par un logement à encliquetage (18) et une section d'accouplement (40) pouvant être amenée en prise avec le logement à encliquetage (18),
dans lequel le logement à encliquetage (18) est configuré pour se déformer élastiquement de manière réversible pour recevoir et libérer sélectivement la section d'accouplement (40), et le mécanisme de blocage (60) peut être amené dans une position d'inhibition dans laquelle il est configuré pour empêcher et/ou inhiber la déformation élastique du logement à encliquetage (18) pour libérer la section d'accouplement (40).

5. Auxiliaire de fabrication (1) selon la revendication 4,
dans lequel la première pièce auxiliaire de fabrication (2) présente une section d'introduction (32) reliée au logement à encliquetage (18), et la section d'accouplement (40) est configurée pour exercer une force de déformation (F3) sur la section d'introduction (32) pour déformer élastiquement le logement à encliquetage (18), et
le mécanisme de blocage (60) est configuré pour appliquer une force de retenue (F4) s'opposant à la force de déformation sur la section d'introduction (32).

6. Auxiliaire de fabrication (1) selon la revendication 4 ou 5,
dans lequel le mécanisme de blocage (60) présente un étrier (61) pouvant pivoter à partir d'une position de libération (FS) dans la position d'inhibition et un élément de verrouillage (63) pouvant être amené en prise avec l'étrier (61) dans la position d'inhibition.

7. Auxiliaire de fabrication (1) selon la revendication 6,
dans lequel la section d'introduction (32) présente une première branche (33.1) et une deuxième branche (33.2), dans lequel l'étrier (61) est associé à la première branche (33.1) et l'élément de verrouillage (63) est associé à la deuxième branche (33.2), et l'étrier (61) peut être mis en prise avec l'élément de verrouillage (63) dans la position d'inhibition pour empêcher la déformation élastique de la première branche (33.1) par rapport à la deuxième branche (33.2).

8. Auxiliaire de fabrication (1) selon la revendication 6 ou 7,
dans lequel l'étrier (61) est configuré pour s'appuyer, dans la position de libération (FS), sur au moins une surface d'appui (35) de la première pièce auxiliaire de fabrication (2).

9. Auxiliaire de fabrication (1) selon l'une quelconque des revendications précédentes,
dans lequel la première pièce auxiliaire de fabrication (2) comprend un mécanisme de levier (16) et un élément à cran d'arrêt (10) coopérant avec le mécanisme de levier (16),
lequel peut être amené, par une déformation élastique de la première pièce auxiliaire de fabrication (2), dans une position d'arrêt et une position de desserrage et est configuré pour s'insérer, dans la position d'arrêt, dans une interface de montage (122) du cadre (120) et pour libérer l'interface de montage (122) dans la position de desserrage,
dans lequel le mécanisme de levier (16) présente un levier (20) accouplé à l'élément à cran d'arrêt (10) et est configuré pour amener l'élément à cran d'arrêt (10), à partir de la position d'arrêt, dans la position de desserrage par application d'une force de desserrage (F1) sur le levier (20), et
dans lequel le mécanisme de levier (16) présente un élément à ressort (25), coopérant avec l'élément à cran d'arrêt (10), qui est configuré pour appliquer, au moins de manière indirecte sur l'élément à cran d'arrêt (10), une force de ressort (F5) agissant en direction de la position d'arrêt.

10. Auxiliaire de fabrication (1) selon la revendication 9,
dans lequel l'élément ressort (25) est configuré pour appliquer la force de ressort (F5) sur le levier de sorte que le levier (20) transmette la force de ressort (F5) à l'élément à cran d'arrêt (10) et que la force de desserrage (F1) doive surmonter la force de ressort (F5) pour amener l'élément à cran d'arrêt (10) dans la position de desserrage.

11. Auxiliaire de fabrication (1) selon la revendication 9 ou 10,
dans lequel l'élément ressort (25) est disposé entre le levier (20) et une surface d'appui (39) opposée et est réalisé sensiblement en forme de U, avec deux sections de branche (25.1, 25.2), dont l'une est en appui avec le levier (20).

12. Auxiliaire de fabrication (1) selon l'une quelconque des revendications précédentes,
dans lequel la première pièce auxiliaire de fabrication (2) présente une nervure de renforcement (29) qui s'étend à partir du logement à encliquetage (18) vers l'élément à cran d'arrêt (10) et est configurée pour diriger des forces à partir du logement à encliquetage (18) dans le cadre (120) par le biais de l'élément à cran d'arrêt (10).

13. Auxiliaire de fabrication (1) selon la revendication 12,
dans lequel la première pièce auxiliaire de fabrication (2) présente un logement (8) pouvant être amené en prise avec le cadre (120), et la nervure de renforcement (29) s'étend à partir du logement à encliquetage (18) vers l'élément à cran d'arrêt (10) et vers le logement (8), et est configurée pour diriger des forces à partir du logement à encliquetage (18) par l'intermédiaire de l'élément à cran d'arrêt (10) et du logement (8) dans le cadre (120).

14. Procédé pour arrêter de manière détachable une porte (140) sur un cadre (120) d'une carrosserie (100), en particulier d'une carrosserie de véhicule à moteur (100), avec les étapes :
- de fourniture d'un auxiliaire de fabrication (1) selon l'une quelconque des revendications 1 à 13,
- d'accouplement libérable de la première pièce auxiliaire de fabrication (2) au cadre (120),
- d'accouplement libérable de la deuxième pièce auxiliaire de fabrication (4) à la porte (140),
- de déplacement de la porte (140) en direction d'une position fermée de la porte (140), dans lequel la première pièce auxiliaire de fabrication (2) et la deuxième pièce auxiliaire de fabrication sont amenées en prise l'une avec l'autre de manière détachable au moyen d'une liaison à encliquetage (6), et
- d'arrêt de la porte (140) à distance du cadre (120) par l'auxiliaire de fabrication (1),
- d'arrêt sélectif de la liaison à encliquetage (6) de la première pièce auxiliaire de fabrication (2) et de la deuxième pièce auxiliaire de fabrication (4).
